# EUROPEAN PATENT SPECIFICATION

(11) **EP 4 296 874 B1**
(45) Date of publication and mention of the grant of the patent: **11.03.2026**
(21) Application number: 22755564.6
(22) Date of filing: 17.02.2022
(51) Int. Cl.: H04L 9/40, H04W 4/44, B60R 25/24, H04W 4/48, H04L 67/12, G06F 21/44, H04L 9/08, H04L 9/32, H04W 12/069, H04L 9/00, G07C 9/00, H04L 67/125

(54) **VERIFICATION BASED ON PRIVACY PROTECTION**
VERIFIZIERUNG BASIEREND AUF DATENSCHUTZ
VÉRIFICATION BASÉE SUR LA PROTECTION DE LA CONFIDENTIALITÉ

(30) Priority: 18.02.2021 CN 202110187928
(43) Date of publication of application: 27.12.2023
(73) Proprietor: Alipay (Hangzhou) Information Technology Co., Ltd., Hangzhou, Zhejiang 310000 (CN)
(72) Inventor: ZHOU, Lei, Hangzhou, Zhejiang 310000 (CN); MENG, Fei, Hangzhou, Zhejiang 310000 (CN); WENG, Qi, Hangzhou, Zhejiang 310000 (CN)
(74) Representative: Winter, Brandl - Partnerschaft mbB
(86) International application number: PCT/CN2022/076657
(87) International publication number: WO 2022/174791

(56) References cited:
- EP-A1- 3 723 399
- WO-A1-2020/259519
- CN-A- 102 529 888
- CN-A- 105 976 466
- CN-A- 106 257 861
- CN-A- 106 627 484
- CN-A- 106 878 008
- CN-A- 108 206 996
- CN-A- 109 391 581
- CN-A- 111 049 835
- CN-A- 112 836 238
- CN-A- 112 836 238
- US-A1- 2018 091 315

## Description

### TECHNICAL FIELD

Embodiments of this application relate to the field of data processing technologies, and in particular, to privacy-protection-based verification methods, apparatuses, devices, and systems.

### BACKGROUND

With the rapid development of computer technologies, terminal devices such as mobile phones have become necessaries of people's life and work, and the terminal devices can provide users with more diverse services. For example, a user can control a car by using a terminal device. For example, the user can start the car or lock the car by using a mobile phone.

To ensure security of a vehicle control instruction sent by the terminal device in a transmission process, the terminal device can encrypt the vehicle control instruction by using a key, and send an encrypted vehicle control instruction to the car. Then, the car decrypts the vehicle control instruction by using the key, and executes a decrypted vehicle control instruction. EP 3 723 399 A1 provides an identity verification method which comprises establishing a binding relationship with a vehicle terminal by using a near-field communication technique and requesting the vehicle terminal to perform identity verification on a handheld terminal by using a symmetric key, wherein the binding relationship is that the vehicle terminal corresponds to the handheld terminal on a one-to-one basis. However, in the previous process, because a method for encrypting the vehicle control instruction is simple and no identity verification is performed on the terminal device and an in-vehicle device, security of the vehicle control instruction in the transmission process is poor. Therefore, a solution that can improve security of a vehicle control instruction in a transmission process is needed.

### SUMMARY

Embodiments of this specification aim to provide privacy-protection-based verification methods, apparatuses, devices, and systems, to provide a solution that can improve security of a vehicle control instruction in a transmission process. The present invention is set out in the appended claims.

To implement the previous technical solution, the embodiments of this specification are implemented as follows: According to a first aspect, a privacy-protection-based verification method is applied to a terminal device, and includes the following: a local identity verification request for controlling an in-vehicle device is sent to a first server, where the first server is configured to generate target verification information corresponding to the terminal device and the in-vehicle device for the identity verification request; the target verification information and a pre-constructed certificate chain that are sent by the first server are received, and the certificate chain and the target verification information are verified based on a predetermined key of the terminal device to obtain a verification result, where the certificate chain is a multi-level certificate chain generated based on information of the first server, a predetermined key of the first server, device information of the terminal device, the predetermined key of the terminal device, device information of the in-vehicle device, and a predetermined key of the in-vehicle device; and when the verification result is that the verification succeeds, a vehicle control instruction is processed based on the target verification information, and a processed vehicle control instruction is sent to the in-vehicle device, so that the in-vehicle device processes the vehicle control instruction based on the target verification information and the certificate chain.

According to a second aspect, an embodiment of this specification provides a privacy-protection-based verification method. The method is applied to an in-vehicle device and includes the following: target verification information corresponding to a terminal device and the in-vehicle device and a pre-constructed certificate chain that are sent by a first server are received, where the certificate chain is a multi-level certificate chain generated based on information of the first server, a predetermined key of the first server, device information of the terminal device, a predetermined key of the terminal device, device information of the in-vehicle device, and a predetermined key of the in-vehicle device; the certificate chain and the target verification information are verified based on the predetermined key of the in-vehicle device to obtain a verification result; and when the verification result is that the verification succeeds, a processed vehicle control instruction sent by the terminal device is processed based on the target verification information to obtain a vehicle control instruction, and the vehicle control instruction is executed, where the processed vehicle control instruction is an instruction obtained by the terminal device by processing the vehicle control instruction based on the target verification information.

According to a third aspect, an embodiment of this specification provides a privacy-protection-based verification method. The method is applied to a first server and includes the following: target verification information corresponding to a terminal device and an in-vehicle device is generated when a local identity verification request sent by the terminal device for controlling the in-vehicle device is received; and the target verification information and a pre-constructed certificate chain are sent to the terminal device and the in-vehicle device, so that the terminal device processes a vehicle control instruction based on the target verification information after succeeding in verifying the certificate chain and the target verification information based on a predetermined key of the terminal device, so that the in-vehicle device processes, based on the target verification information, a processed vehicle control instruction sent by the terminal device after succeeding in verifying the certificate chain and the target verification information based on a predetermined key of the in-vehicle device, where the certificate chain is a multi-level certificate chain generated based on information of the first server, a predetermined key of the first server, device information of the terminal device, the predetermined key of the terminal device, device information of the in-vehicle device, and the predetermined key of the in-vehicle device.

According to a fourth aspect, an embodiment of this specification provides a privacy-protection-based verification system. The system includes a terminal device, an in-vehicle device, and a first server. The terminal device is configured to send a local identity verification request for controlling the in-vehicle device to the first server. The first server is configured to generate target verification information corresponding to the terminal device and the in-vehicle device, and send the target verification information and a pre-constructed certificate chain to the terminal device and the in-vehicle device, where the certificate chain is a multi-level certificate chain generated based on information of the first server, a predetermined key of the first server, device information of the terminal device, a predetermined key of the terminal device, device information of the in-vehicle device, and a predetermined key of the in-vehicle device. The terminal device is configured to verify the certificate chain and the target verification information based on the predetermined key of the terminal device to obtain a first verification result; and when the first verification result is that the verification succeeds, process a vehicle control instruction based on the target verification information, and send a processed vehicle control instruction to the in-vehicle device. The in-vehicle device is configured to verify the certificate chain and the target verification information based on the predetermined key of the in-vehicle device to obtain a second verification result; and when the second verification result is that the verification succeeds, process the received processed vehicle control instruction based on the target verification information to obtain the vehicle control instruction, and execute the vehicle control instruction.

According to a fifth aspect, an embodiment of this specification provides a privacy-protection-based verification apparatus. The apparatus includes: a request sending module, configured to send a local identity verification request for controlling an in-vehicle device to a first server, where the first server is configured to generate target verification information corresponding to the privacy-protection-based verification apparatus and the in-vehicle device for the identity verification request; a verification module, configured to receive the target verification information and a pre-constructed certificate chain that are sent by the first server, and verify the certificate chain and the target verification information based on a predetermined key of the terminal device to obtain a verification result, where the certificate chain is a multi-level certificate chain generated based on information of the first server, a predetermined key of the first server, device information of the privacy-protection-based verification apparatus, the predetermined key of the privacy-protection-based verification apparatus, device information of the in-vehicle device, and a predetermined key of the in-vehicle device; and an instruction sending module, configured to: when the verification result is that the verification succeeds, process a vehicle control instruction based on the target verification information, and send a processed vehicle control instruction to the in-vehicle device, so that the in-vehicle device processes the vehicle control instruction based on the target verification information and the certificate chain.

According to a sixth aspect, an embodiment of this specification provides a privacy-protection-based verification apparatus. The apparatus includes: an information receiving module, configured to receive target verification information corresponding to a terminal device and the privacy-protection-based verification apparatus and a pre-constructed certificate chain that are sent by a first server, where the certificate chain is a multi-level certificate chain generated based on information of the first server, a predetermined key of the first server, device information of the terminal device, a predetermined key of the terminal device, device information of the privacy-protection-based verification apparatus, and a predetermined key of the privacy-protection-based verification apparatus; a verification module, configured to verify the certificate chain and the target verification information based on the predetermined key of the privacy-protection-based verification apparatus to obtain a verification result; and an instruction processing module, configured to: when the verification result is that the verification succeeds, process, based on the target verification information, a processed vehicle control instruction sent by the terminal device, to obtain a vehicle control instruction, and execute the vehicle control instruction, where the processed vehicle control instruction is an instruction obtained by the terminal device by processing the vehicle control instruction based on the target verification information.

According to a seventh aspect, an embodiment of this specification provides a privacy-protection-based verification apparatus. The apparatus includes: an information generation module, configured to generate target verification information corresponding to a terminal device and an in-vehicle device when receiving a local identity verification request sent by the terminal device for controlling the in-vehicle device; and an information sending module, configured to send the target verification information and a pre-constructed certificate chain to the terminal device and the in-vehicle device, so that the terminal device processes a vehicle control instruction based on the target verification information after succeeding in verifying the certificate chain and the target verification information based on a predetermined key of the terminal device, so that the in-vehicle device processes, based on the target verification information, a processed vehicle control instruction sent by the terminal device after succeeding in verifying the certificate chain and the target verification information based on a predetermined key of the in-vehicle device, where the certificate chain is a multi-level certificate chain generated based on information of the privacy-protection-based verification apparatus, a predetermined key of the privacy-protection-based verification apparatus, device information of the terminal device, the predetermined key of the terminal device, device information of the in-vehicle device, and the predetermined key of the in-vehicle device.

According to an eighth aspect, an embodiment of this specification provides a privacy-protection-based verification device. The privacy-protection-based verification device includes a processor and a memory arranged to store computer-executable instructions, and when the executable instructions are executed, the processor is caused to: send a local identity verification request for controlling an in-vehicle device to a first server, where the first server is configured to generate target verification information corresponding to the privacy-protection-based verification device and the in-vehicle device for the identity verification request; receive the target verification information and a pre-constructed certificate chain that are sent by the first server, and verify the certificate chain and the target verification information based on a predetermined key of the privacy-protection-based verification device to obtain a verification result, where the certificate chain is a multi-level certificate chain generated based on information of the first server, a predetermined key of the first server, device information of the privacy-protection-based verification device, the predetermined key of the privacy-protection-based verification device, device information of the in-vehicle device, and a predetermined key of the in-vehicle device; and when the verification result is that the verification succeeds, process a vehicle control instruction based on the target verification information, and send a processed vehicle control instruction to the in-vehicle device, so that the in-vehicle device processes the vehicle control instruction based on the target verification information and the certificate chain.

According to a ninth aspect, an embodiment of this specification provides a privacy-protection-based verification device. The privacy-protection-based verification device includes a processor and a memory arranged to store computer-executable instructions, and when the executable instructions are executed, the processor is caused to: receive target verification information corresponding to a terminal device and the privacy-protection-based verification device and a pre-constructed certificate chain that are sent by a first server, where the certificate chain is a multi-level certificate chain generated based on information of the first server, a predetermined key of the first server, device information of the terminal device, a predetermined key of the terminal device, device information of the privacy-protection-based verification device, and a predetermined key of the privacy-protection-based verification device; verify the certificate chain and the target verification information based on the predetermined key of the privacy-protection-based verification device; and after the verification succeeds, process, based on the target verification information, a processed vehicle control instruction sent by the terminal device, to obtain a vehicle control instruction, and execute the vehicle control instruction, where the processed vehicle control instruction is an instruction obtained by the terminal device by processing the vehicle control instruction based on the target verification information.

According to a tenth aspect, an embodiment of this specification provides a privacy-protection-based verification device. The privacy-protection-based verification device includes a processor and a memory arranged to store computer-executable instructions, and when the executable instructions are executed, the processor is caused to: generate target verification information corresponding to a terminal device and an in-vehicle device when receiving a local identity verification request sent by the terminal device for controlling the in-vehicle device; and send the target verification information and a pre-constructed certificate chain to the terminal device and the in-vehicle device, so that the terminal device processes a vehicle control instruction based on the target verification information after succeeding in verifying the certificate chain and the target verification information based on a predetermined key of the terminal device, so that the in-vehicle device processes, based on the target verification information, a processed vehicle control instruction sent by the terminal device after succeeding in verifying the certificate chain and the target verification information based on a predetermined key of the in-vehicle device, where the certificate chain is a multi-level certificate chain generated based on information of the privacy-protection-based verification device, a predetermined key of the privacy-protection-based verification device, device information of the terminal device, the predetermined key of the terminal device, device information of the in-vehicle device, and the predetermined key of the in-vehicle device.

### BRIEF DESCRIPTION OF DRAWINGS

FIG. 1A is a flowchart illustrating an embodiment of a privacy-protection-based verification method according to this specification;
FIG. 1B is a schematic diagram illustrating a processing process of a privacy-protection-based verification method according to this specification;
FIG. 2A is a schematic diagram illustrating a processing process of another privacy-protection-based verification method according to this specification;
FIG. 2B is a schematic diagram illustrating a processing process of another privacy-protection-based verification method according to this specification;
FIG. 3A is a schematic diagram illustrating a trusted execution environment configured in a terminal device according to this specification;
FIG. 3B is a schematic diagram illustrating a trusted execution environment configured in a terminal device according to this specification;
FIG. 4A is a flowchart illustrating an embodiment of another privacy-protection-based verification method according to this specification;
FIG. 4B is a schematic diagram illustrating a processing process of another privacy-protection-based verification method according to this specification;
FIG. 5A is a schematic diagram illustrating a processing process of another privacy-protection-based verification method according to this specification;
FIG. 5B is a schematic diagram illustrating a processing process of another privacy-protection-based verification method according to this specification;
FIG. 6 is a schematic diagram illustrating a processing process of another privacy-protection-based verification method according to this specification;
FIG. 7 is a schematic diagram illustrating a privacy-protection-based verification system according to this specification;
FIG. 8 is a schematic diagram illustrating a structure of an embodiment of a privacy-protection-based verification apparatus according to this specification;
FIG. 9 is a schematic diagram illustrating a structure of an embodiment of another privacy-protection-based verification apparatus according to this specification;
FIG. 10 is a schematic diagram illustrating a structure of an embodiment of another privacy-protection-based verification apparatus according to this specification; and
FIG. 11 is a schematic diagram illustrating a structure of a privacy-protection-based verification device according to this specification.

### DESCRIPTION OF EMBODIMENTS

### Embodiment 1

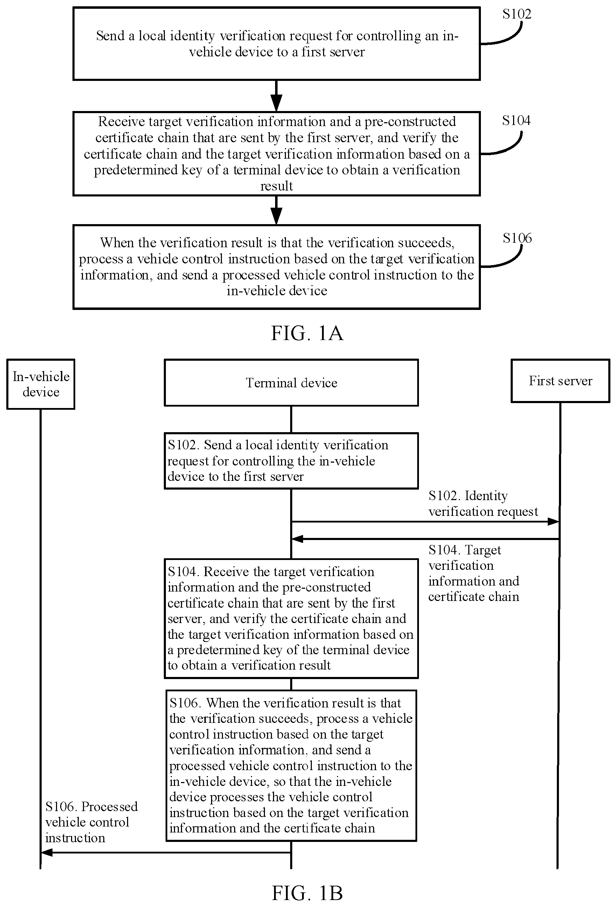

As shown in FIG. 1A and FIG. 1B, this embodiment of this specification provides a privacy-protection-based verification method. The method can be executed by a terminal device. The terminal device can be a mobile terminal device such as a mobile phone or a tablet computer, or can be a device such as a personal computer. The method can specifically include the following steps.

In S102, a local identity verification request for controlling an in-vehicle device is sent to a first server.

The in-vehicle device can be a device that is installed in a vehicle to be controlled and that can communicate with the terminal device based on a predetermined information transmission method. In addition, the in-vehicle device can further execute a vehicle control instruction sent by the terminal device (the in-vehicle device can control the vehicle to be controlled based on the vehicle control instruction sent by the terminal device). The first server can be configured to generate target verification information corresponding to the terminal device and the in-vehicle device for the identity verification request. The target verification information can be any information that can be used to verify the terminal device and the in-vehicle device. For example, the first server can generate information corresponding to a device identifier of the terminal device and a device identifier of the in-vehicle device based on a predetermined information generation algorithm (for example, a predetermined random number generation algorithm or a predetermined hash value generation algorithm), and use the information as the target verification information. In addition, there can be a plurality of methods for generating the target verification information, and different generation methods can be used based on different actual application scenarios. Implementations are not specifically limited in this embodiment of this specification.

With the rapid development of computer technologies, terminal devices such as mobile phones have become necessaries of people's life and work, and the terminal devices can provide users with more diverse services. For example, a user can control a car by using a terminal device. For example, the user can start the car or lock the car by using a mobile phone. To ensure security of a vehicle control instruction sent by the terminal device in a transmission process, the terminal device can encrypt the vehicle control instruction by using a key, and send an encrypted vehicle control instruction to the car. Then, the car decrypts the vehicle control instruction by using the key, and executes a decrypted vehicle control instruction. However, in the previous process, because a method for encrypting the vehicle control instruction is simple and no identity verification is performed on the terminal device and an in-vehicle device, security of the vehicle control instruction in the transmission process is poor. Therefore, a solution that can improve security of a vehicle control instruction in a transmission process is needed. In view of this, this embodiment of this specification provides a technical solution that can resolve the previous problem. For details, references can be made to the following content.

An application used to control a vehicle can be installed in the terminal device. When detecting that a user starts the application and detecting that the user triggers a certain vehicle control instruction, the terminal device can send a local identity verification request for controlling the in-vehicle device to the first server.

In S104, the target verification information and a pre-constructed certificate chain that are sent by the first server are received, and the certificate chain and the target verification information are verified based on a predetermined key of the terminal device to obtain a verification result.

The certificate chain is a multi-level certificate chain generated based on information of the first server, a predetermined key of the first server, device information of the terminal device, the predetermined key of the terminal device, device information of the in-vehicle device, and a predetermined key of the in-vehicle device. The information of the first server can include unique identification information of the first server, the device information of the terminal device can include unique identification information of the terminal device, and the device information of the in-vehicle device can include unique identification information of the in-vehicle device.

Because the certificate chain received by the terminal device is the multi-level certificate chain generated based on the information of the first server, the predetermined key of the first server, the device information of the terminal device, the predetermined key of the terminal device, the device information of the in-vehicle device, and the predetermined key of the in-vehicle device, one or more levels of certificates related to the terminal device in the certificate chain can be verified based on the predetermined key of the terminal device to obtain a verification result 1. In addition, the target verification information can also be verified based on the predetermined key of the terminal device to obtain a verification result 2, and the verification result is determined based on the verification result 1 and the verification result 2.

When the target verification information is information obtained by the first server by processing the device information of the terminal device based on the predetermined key of the terminal device and the predetermined key of the in-vehicle device, the terminal device can further obtain the predetermined key of the in-vehicle device based on the certificate chain and the predetermined key of the terminal device; and then process the target verification information by using the predetermined key of the terminal device and the obtained predetermined key of the in-vehicle device to obtain corresponding device information of the terminal device, and perform matching verification on the obtained device information of the terminal device by using the locally stored device information of the terminal device, to obtain the verification result 2.

A method for determining the verification result is an optional and implementable determining method. In actual application scenarios, there can be a plurality of different methods for determining the verification result, and different determining methods can be used based on different actual application scenarios. Implementations are not specifically limited in this embodiment of this specification.

In S106, when the verification result is that the verification succeeds, a vehicle control instruction is processed based on the target verification information, and a processed vehicle control instruction is sent to the in-vehicle device, so that the in-vehicle device processes the vehicle control instruction based on the target verification information and the certificate chain.

When the verification result is that the verification succeeds, the vehicle control instruction can be encrypted based on the target verification information, and an encrypted vehicle control instruction is sent to the in-vehicle device, so that the in-vehicle device decrypts the encrypted vehicle control instruction based on the locally stored target verification information, and executes a decrypted vehicle control instruction.

Alternatively, when the verification result is that the verification succeeds, the terminal device can encrypt the vehicle control instruction based on the predetermined key of the terminal device to obtain an encrypted vehicle control instruction; and then sign the encrypted vehicle control instruction by using the target verification information to obtain corresponding signature information, and send the signature information and the encrypted vehicle control instruction to the in-vehicle device, so that the in-vehicle device obtains the predetermined key of the terminal device based on the certificate chain, and verifies the received signature information by using the predetermined key of the terminal device. In addition, the in-vehicle device can further decrypt the encrypted vehicle control instruction by using the locally stored target verification information, and the in-vehicle device can execute a decrypted vehicle control instruction when the verification on the signature information succeeds.

A method for processing the vehicle control instruction is an optional and implementable processing method. In actual application scenarios, there can be a plurality of different processing methods, and different processing methods can be used based on different actual application scenarios. Implementations are not specifically limited in this embodiment of this specification.

In addition, the terminal device can be a mobile terminal device such as a mobile phone or a tablet computer, and the terminal device can perform information transmission with the in-vehicle device based on a predetermined short-distance transmission method (for example, a Bluetooth short-distance transmission method or an infrared short-distance transmission method).

In addition, to ensure data processing security, a trusted execution environment (TEE) can be installed in the terminal device. The terminal device can verify the certificate chain and the target verification information based on the predetermined key of the terminal device in the locally installed TEE to obtain the verification result, and process the vehicle control instruction based on the target verification information when the verification result is that the verification succeeds.

According to the privacy-protection-based verification method provided in this embodiment of this specification, a local identity verification request for controlling an in-vehicle device is sent to a first server, where the first server is configured to generate target verification information corresponding to a terminal device and the in-vehicle device for the identity verification request; the target verification information and a pre-constructed certificate chain that are sent by the first server are received, and the certificate chain and the target verification information are verified based on a predetermined key of the terminal device to obtain a verification result, where the certificate chain is a multi-level certificate chain generated based on information of the first server, a predetermined key of the first server, device information of the terminal device, the predetermined key of the terminal device, device information of the in-vehicle device, and a predetermined key of the in-vehicle device; and when the verification result is that the verification succeeds, a vehicle control instruction is processed based on the target verification information, and a processed vehicle control instruction is sent to the in-vehicle device, so that the in-vehicle device processes the vehicle control instruction based on the target verification information and the certificate chain. As such, the target verification information is verification information that corresponds to the terminal device and the in-vehicle device and that is generated by the first server, and the certificate chain is a certificate chain including related information of the first server, the terminal device, and the in-vehicle device. Therefore, the terminal device and the in-vehicle device can separately perform identity verification on the local party and the other party (the in-vehicle device) by using the target verification information and the certificate chain; and when a verification result is that the verification succeeds, process the vehicle control instruction by using the target verification information, thereby improving security of the vehicle control instruction in a transmission process.

### Embodiment 2

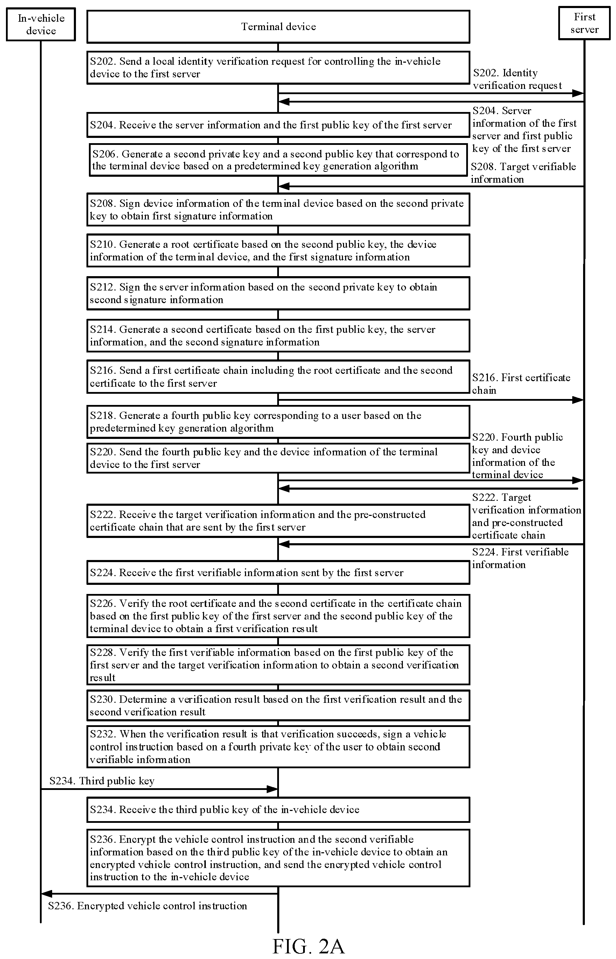

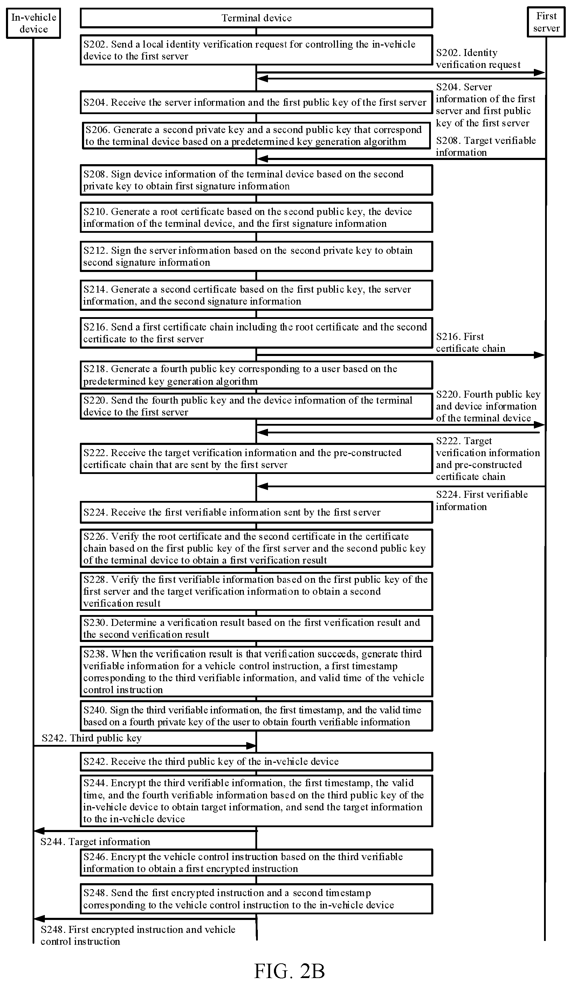

As shown in FIG. 2A and FIG. 2B, this embodiment of this specification provides a privacy-protection-based verification method. The method can be executed by a terminal device. The terminal device can be a mobile terminal device such as a mobile phone or a tablet computer, or can be a device such as a personal computer. The method can specifically include the following steps. In S202, a local identity verification request for controlling an in-vehicle device is sent to a first server.

For a specific processing process of S202, references can be made to related content of S102 in Embodiment 1. Details are omitted here for simplicity.

In S204, server information of the first server and a first public key of the first server are received.

The first public key can be a key that corresponds to the first server and that is generated by the first server based on a predetermined key generation algorithm, and the server information of the first server can include identification information of the first server, attribute information of the first server, etc.

In S206, a second private key and a second public key that correspond to the terminal device are generated based on the predetermined key generation algorithm.

The terminal device can generate the second private key and the second public key that correspond to device information of the terminal device based on a predetermined asymmetric key generation algorithm. The second private key and the second public key can be root keys generated by the terminal device.

In S208, the device information of the terminal device is signed based on the second private key to obtain first signature information.

The terminal device can sign the device information of the terminal device based on the second private key by using a predetermined signature generation algorithm, to obtain the first signature information. The device information of the terminal device can include identification information of the terminal device, such as a device ID, a product serial number (SN), and a media access control (MAC) address of the terminal device.

In S210, a root certificate is generated based on the second public key, the device information of the terminal device, and the first signature information.

In S212, the server information is signed based on the second private key to obtain second signature information.

In S214, a second certificate is generated based on the first public key, the server information, and the second signature information.

The root certificate can further include related information such as a validity period of the root certificate in addition to the second public key, the device information of the terminal device, and the first signature information. The second certificate can include related information such as a validity period of the second certificate.

In S216, a first certificate chain including the root certificate and the second certificate is sent to the first server, so that the first server constructs a certificate chain based on the first certificate chain, device information of the in-vehicle device, and a predetermined key of the in-vehicle device.

The pre-constructed certificate chain can be a chain structure including a plurality of levels of certificates, the first certificate chain can be constructed by using the root certificate and the second certificate, and the second certificate can be used as a level-2 certificate in the first certificate chain.

The first server can construct a certificate chain including three levels of certificates based on the first certificate chain, the device information of the in-vehicle device, and the predetermined key of the in-vehicle device, that is, can generate a third certificate based on the device information of the in-vehicle device and the predetermined key of the in-vehicle device, and add the third certificate to the first certificate chain to form the certificate chain including three levels of certificates. The third certificate is a level-3 certificate in the certificate chain.

In S218, a fourth public key corresponding to a user is generated based on the predetermined key generation algorithm.

The fourth public key corresponding to the user can be generated based on the predetermined key generation algorithm in a TEE of the terminal device.

There can be various processing methods of S218. The following provides an optional implementation. For details, references can be made to processing in the following step 1 to step 3. In step 1, an identity verification request for the user is sent to a second server. The second server can be a server corresponding to an application that is installed in the terminal device and that is used to control the in-vehicle device.

Before the fourth public key corresponding to the user is generated, identity verification can be performed on the user. For example, when detecting that the user runs the application and triggers a login request, the terminal device can send the identity verification request for the user to the second server.

In step 2, a target token generated by the second server based on the identity verification request is received. The target token can be a token generated by the second server based on pre-stored related information of the user.

In step 3, identify verification is performed on the user based on the target token, and the fourth public key corresponding to the user is generated based on the predetermined key generation algorithm when an identity verification result is that the verification succeeds.

For example, the target token is a token that corresponds to prestored biometric feature information of the user and that is generated by the second server by using a predetermined hash value generation algorithm. The terminal device can obtain biometric feature information (such as fingerprint information and iris information) of the user, and generate verification information corresponding to the obtained biometric feature information of the user based on the predetermined hash value generation algorithm; and then perform matching verification on the generated verification information and the target token, and generate the fourth public key corresponding to the user based on the predetermined key generation algorithm in the TEE of the terminal device when a verification result is that the verification succeeds.

In S220, the fourth public key and the device information of the terminal device are sent to the first server, so that the first server generates target verification information based on the device information of the terminal device, the fourth public key, the predetermined key of the in-vehicle device, and the device information of the in-vehicle device.

In S222, the target verification information and the pre-constructed certificate chain that are sent by the first server are received. The received target verification information can include information such as the fourth public key of the user and the predetermined key of the in-vehicle device.

In S224, first verifiable information sent by the first server is received. The first verifiable information can be information that corresponds to the target verification information and that is obtained by the first server by encrypting the target verification information based on a first private key of the first server.

In S226, the root certificate and the second certificate in the certificate chain are verified based on the first public key of the first server and the second public key of the terminal device to obtain a first verification result.

The second certificate is generated based on the first public key, the server information, and the second signature information, and the second signature information is obtained by signing the server information based on the second private key of the terminal device. Therefore, the terminal device can sign the server information in the second certificate by using the second private key to obtain corresponding signature information, and perform matching verification with the second signature information in the second certificate to obtain a first verification result 1.

Similarly, the root certificate is generated based on the second public key, the device information of the terminal device, and the first signature information, and the first signature information is obtained by the terminal device by signing the device information of the terminal device based on the second private key. Therefore, the terminal device can sign the device information of the terminal device in the root certificate based on the second private key to obtain corresponding signature information, and perform matching verification with the first signature information in the root certificate to obtain a first verification result 2.

Then, the terminal device can determine the first verification result based on the first verification result 1 and the first verification result 2.

A method for determining the first verification result is an optional and implementable determining method. In actual application scenarios, there can be a plurality of different determining methods, and different determining methods can be used based on different actual application scenarios. Implementations are not specifically limited in this embodiment of this specification.

In S228, the first verifiable information is verified based on the first public key of the first server and the target verification information to obtain a second verification result. The first verifiable information is the information obtained by the first server by encrypting the target verification information based on the first private key of the first server. Therefore, the terminal device can decrypt the first verifiable information by using the first public key of the first server to obtain corresponding target verification information, and perform matching verification with the received target verification information to obtain the second verification result.

In S230, a verification result is determined based on the first verification result and the second verification result. When both the first verification result and the second verification result are that verification succeeds, it can be determined that the verification result is that verification succeeds. When at least one of the first verification result or the second verification result is that verification fails, it can be determined that the verification result is that verification fails.

After S230, when the verification result is that verification succeeds, S232 to S236 can be continued to be executed as shown in FIG. 2A, to process a vehicle control instruction, or S238 to S248 can be continued to be executed as shown in FIG. 2B, to process a vehicle control instruction.

In S232, when the verification result is that verification succeeds, the vehicle control instruction is signed based on a fourth private key of the user to obtain second verifiable information. The fourth private key can be a private key that corresponds to the fourth public key and that is generated by the terminal device based on the predetermined key generation algorithm. When the verification result is that verification succeeds, the terminal device can obtain the fourth private key of the user, and encrypt the vehicle control instruction based on the fourth private key by using the predetermined signature generation algorithm, to obtain the second verifiable information.

In S234, a third public key of the in-vehicle device is received. The third public key can be a key that corresponds to the in-vehicle device and that is generated by the in-vehicle device based on the predetermined key generation algorithm.

In S236, the vehicle control instruction and the second verifiable information are encrypted based on the third public key of the in-vehicle device to obtain an encrypted vehicle control instruction, and the encrypted vehicle control instruction is sent to the in-vehicle device, so that the in-vehicle device processes the vehicle control instruction based on the fourth public key and a third private key, where the third private key is a private key that corresponds to the third public key and that is generated by the in-vehicle device. The encrypted vehicle control instruction is obtained by the terminal device by encrypting the vehicle control instruction and the second verifiable information, and the second verifiable information is verification information obtained by the terminal device by encrypting the vehicle control instruction based on the fourth private key of the user. Therefore, security of transmission of the vehicle control instruction between the terminal device and the in-vehicle device can be ensured.

In S238, when the verification result is that verification succeeds, third verifiable information for the vehicle control instruction, a first timestamp corresponding to the third verifiable information, and valid time of the vehicle control instruction are generated. The third verifiable information can be a random number that is of a predetermined bit quantity, that corresponds to the vehicle control instruction, and that is generated by the terminal device based on a predetermined random number generation algorithm.

In S240, the third verifiable information, the first timestamp, and the valid time are signed based on a fourth private key of the user to obtain fourth verifiable information.

In S242, a third public key of the in-vehicle device is received. The third public key can be a key that corresponds to the in-vehicle device and that is generated by the in-vehicle device based on the predetermined key generation algorithm.

In S244, the third verifiable information, the first timestamp, the valid time, and the fourth verifiable information are encrypted based on the third public key of the in-vehicle device to obtain target information, and the target information is sent to the in-vehicle device. The in-vehicle device can verify the target information, and store the target information when the verification succeeds.

In S246, the vehicle control instruction is encrypted based on the third verifiable information to obtain a first encrypted instruction.

In S248, the first encrypted instruction and a second timestamp corresponding to the vehicle control instruction are sent to the in-vehicle device, so that the in-vehicle device processes the first encrypted instruction based on the first encrypted instruction, the second timestamp, and the stored target information. The in-vehicle device can decrypt, based on the stored third verifiable information, the first encrypted instruction sent by the terminal device, to obtain a corresponding vehicle control instruction, and verify the second timestamp based on the first timestamp and the valid time in the target information. The in-vehicle device can execute the decrypted vehicle control instruction when the verification succeeds.

According to the privacy-protection-based verification method provided in this embodiment of this specification, a local identity verification request for controlling an in-vehicle device is sent to a first server, where the first server is configured to generate target verification information corresponding to a terminal device and the in-vehicle device for the identity verification request; the target verification information and a pre-constructed certificate chain that are sent by the first server are received, and the certificate chain and the target verification information are verified based on a predetermined key of the terminal device to obtain a verification result, where the certificate chain is a multi-level certificate chain generated based on information of the first server, a predetermined key of the first server, device information of the terminal device, the predetermined key of the terminal device, device information of the in-vehicle device, and a predetermined key of the in-vehicle device; and when the verification result is that the verification succeeds, a vehicle control instruction is processed based on the target verification information, and a processed vehicle control instruction is sent to the in-vehicle device, so that the in-vehicle device processes the vehicle control instruction based on the target verification information and the certificate chain. As such, the target verification information is verification information that corresponds to the terminal device and the in-vehicle device and that is generated by the first server, and the certificate chain is a certificate chain including related information of the first server, the terminal device, and the in-vehicle device. Therefore, the terminal device and the in-vehicle device can separately perform identity verification on the local party and the other party (the in-vehicle device) by using the target verification information and the certificate chain; and when a verification result is that the verification succeeds, process the vehicle control instruction by using the target verification information, thereby improving security of the vehicle control instruction in a transmission process.

### Embodiment 3

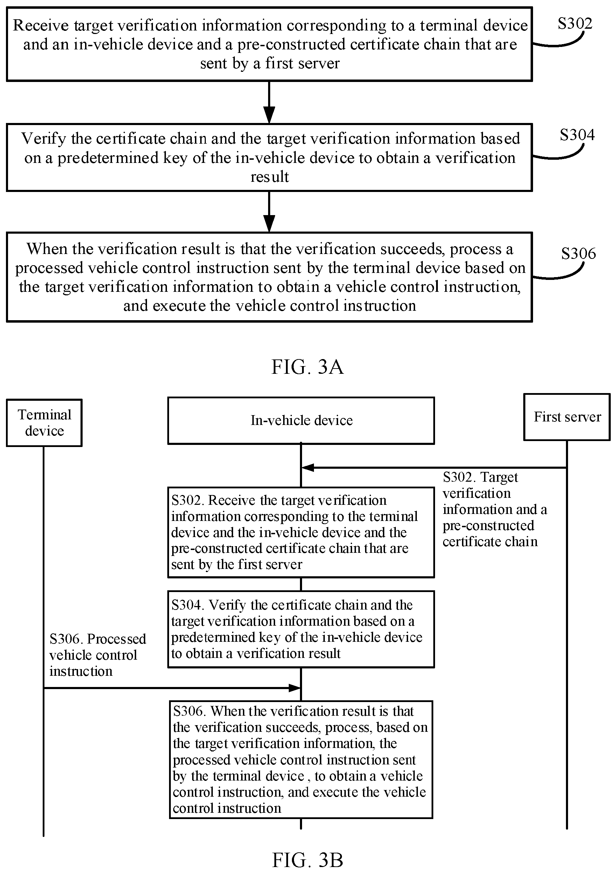

As shown in FIG. 3A and FIG. 3B, this embodiment of this specification provides a privacy-protection-based verification method. The method can be executed by an in-vehicle device. The in-vehicle device can be a device that is installed in a vehicle to be controlled and that can communicate with a terminal device based on a predetermined information transmission method, and the in-vehicle device can further execute a vehicle control instruction sent by the terminal device (control the vehicle based on the vehicle control instruction sent by the terminal device). The method can specifically include the following steps. In S302, target verification information corresponding to the terminal device and the in-vehicle device and a pre-constructed certificate chain that are sent by a first server are received.

The certificate chain can be a multi-level certificate chain generated based on information of the first server, a predetermined key of the first server, device information of the terminal device, a predetermined key of the terminal device, device information of the in-vehicle device, and a predetermined key of the in-vehicle device.

In S304, the certificate chain and the target verification information are verified based on the predetermined key of the in-vehicle device to obtain a verification result.

For example, the certificate chain includes a root certificate that includes information such as the device information of the terminal device and the predetermined key of the terminal device, an intermediate certificate that includes information such as the information of the first server and the predetermined key of the first server, and a third certificate that includes the device information of the in-vehicle device and the predetermined key of the in-vehicle device. An owner (the terminal device) of the root certificate can sign the intermediate certificate by using a private key of the owner, and an owner (the first server) of the intermediate certificate can sign the third certificate by using a private key of the owner.

The in-vehicle device can verify the three levels of certificate chain one by one by using the local predetermined key, that is, verify signature information included in the third certificate by using a local private key; and after the verification succeeds, verify validity of the intermediate certificate by using a public key that is of the owner of the intermediate certificate and that is included in the third certificate, and then verify validity of the root certificate by using a public key that is of the owner of the root certificate and that is included in the intermediate certificate, and obtain a verification result.

A method for determining the verification result is an optional and implementable determining method. In actual application scenarios, there can be a plurality of different determining methods, and different determining methods can be used based on different actual application scenarios. Implementations are not specifically limited in this embodiment of this specification.

In S306, when the verification result is that the verification succeeds, a processed vehicle control instruction sent by the terminal device is processed based on the target verification information to obtain a vehicle control instruction, and the vehicle control instruction is executed. The processed vehicle control instruction can be an instruction obtained by the terminal device by processing the vehicle control instruction based on the target verification information. For example, the processed vehicle control instruction is an instruction obtained by the terminal device by encrypting the vehicle control instruction based on the target verification information. The in-vehicle device can decrypt an encrypted vehicle control instruction based on the stored target verification information, and execute a decrypted vehicle control instruction.

A TEE can also be installed in the in-vehicle device to ensure data security in the previous data processing process.

According to the privacy-protection-based verification method provided in this embodiment of this specification, target verification information corresponding to a terminal device and an in-vehicle device and a pre-constructed certificate chain that are sent by a first server are received, where the certificate chain is a multi-level certificate chain generated based on information of the first server, a predetermined key of the first server, device information of the terminal device, a predetermined key of the terminal device, device information of the in-vehicle device, and a predetermined key of the in-vehicle device; the certificate chain and the target verification information are verified based on the predetermined key of the in-vehicle device to obtain a verification result; and when the verification result is that the verification succeeds, a processed vehicle control instruction sent by the terminal device is processed based on the target verification information to obtain a vehicle control instruction, and the vehicle control instruction is executed, where the processed vehicle control instruction is an instruction obtained by the terminal device by processing the vehicle control instruction based on the target verification information. As such, the target verification information is verification information that corresponds to the terminal device and the in-vehicle device and that is generated by the first server, and the certificate chain is a certificate chain including related information of the first server, the terminal device, and the in-vehicle device. Therefore, the terminal device and the in-vehicle device can separately perform identity verification on the local party and the other party (the terminal device) by using the target verification information and the certificate chain; and when a verification result is that the verification succeeds, process the vehicle control instruction by using the target verification information, thereby improving security of the vehicle control instruction in a transmission process.

### Embodiment 4

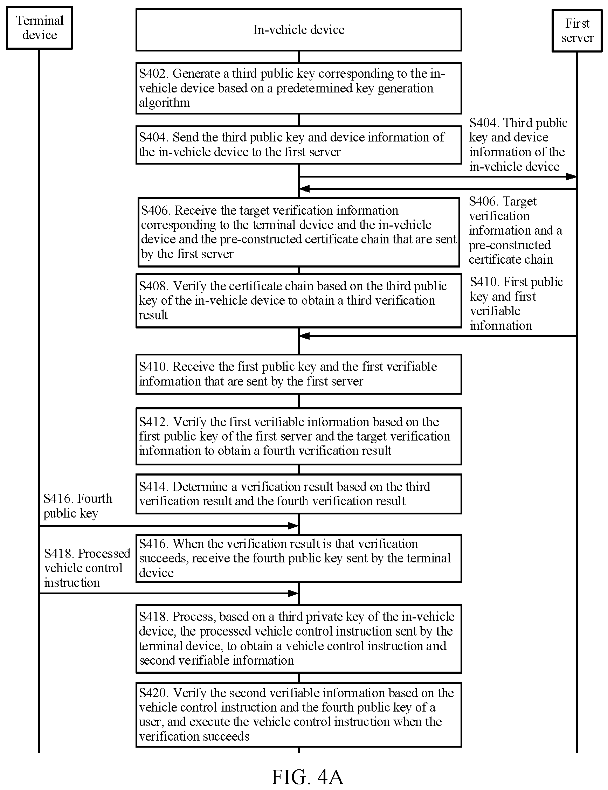

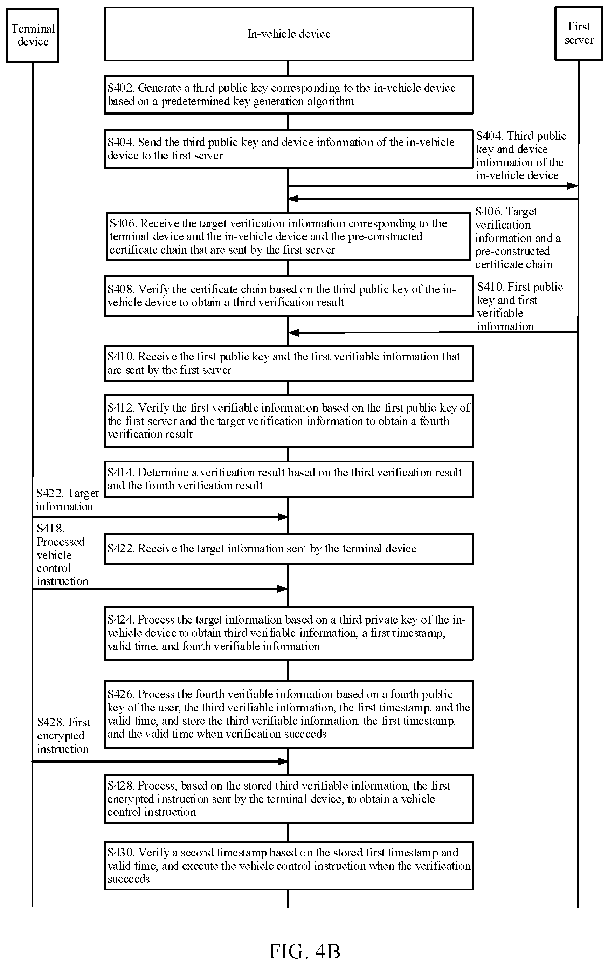

As shown in FIG. 4A and FIG. 4B, this embodiment of this specification provides a privacy-protection-based verification method. The method can be executed by an in-vehicle device. The in-vehicle device can be a device that is installed in a vehicle to be controlled and that can communicate with a terminal device based on a predetermined information transmission method, and the in-vehicle device can further execute a vehicle control instruction sent by the terminal device (control the vehicle based on the vehicle control instruction sent by the terminal device). The method can specifically include the following steps. In S402, a third public key corresponding to the in-vehicle device is generated based on a predetermined key generation algorithm.

In S404, the third public key and device information of the in-vehicle device are sent to a first server, so that the first server generates a certificate chain based on the third public key, the device information of the in-vehicle device, information of the first server, a predetermined key of the first server, device information of the terminal device, and a predetermined key of the terminal device.

In S406, target verification information corresponding to the terminal device and the in-vehicle device and the pre-constructed certificate chain that are sent by the first server are received.

In S408, the certificate chain is verified based on the third public key of the in-vehicle device to obtain a third verification result. For a specific processing process of S408, references can be made to related content of S304 in Embodiment 3. Details are omitted here for simplicity.

In S410, a first public key and first verifiable information that are sent by the first server are received.

The first verifiable information can be information that corresponds to target verification information and that is obtained by the first server by encrypting the target verification information based on a first private key of the first server, and the first public key and the first private key can be keys that correspond to the first server and that are generated by the first server based on the predetermined key generation algorithm.

In S412, the first verifiable information is verified based on the first public key of the first server and the target verification information to obtain a fourth verification result. The in-vehicle device can decrypt the first verifiable information based on the first public key of the first server, and perform matching verification on decrypted target verification information and the received target verification information to obtain the fourth verification result.

In S414, a verification result is determined based on the third verification result and the fourth verification result. When both the third verification result and the fourth verification result are that verification succeeds, it can be determined that the verification result is that verification succeeds. When at least one of the third verification result or the fourth verification result is that verification fails, it can be determined that the verification result is that verification fails. When the verification result is that verification succeeds, S416 to S420 can be continued to be executed after S414 as shown in FIG. 4A, or S422 to S430 can be continued to be executed after S414 as shown in FIG. 4B, to process a received processed vehicle control instruction.

In S416, when the verification result is that verification succeeds, a fourth public key sent by the terminal device is received. The fourth public key can be a key that corresponds to a user of the terminal device and that is generated by the terminal device based on the predetermined key generation algorithm.

In S418, the processed vehicle control instruction sent by the terminal device is processed based on a third private key of the in-vehicle device, to obtain a vehicle control instruction and second verifiable information. The processed vehicle control instruction can be obtained by the terminal device by encrypting the vehicle control instruction based on the third public key of the in-vehicle device, the third private key can be a private key that corresponds to the third public key and that is generated by the in-vehicle device based on the predetermined key generation algorithm, the second verifiable information can be information obtained by the terminal device by encrypting the vehicle control instruction based on a fourth private key of the user, and the fourth private key is a private key that corresponds to the fourth public key and that is generated by the terminal device based on the predetermined key generation algorithm.

In S420, the second verifiable information is verified based on the vehicle control instruction and the fourth public key of the user, and the vehicle control instruction is executed when the verification succeeds. The second verifiable information can be decrypted based on the fourth public key of the user, matching verification can be performed on a decrypted vehicle control instruction and the received vehicle control instruction, and the vehicle control instruction can be executed when the verification succeeds.

In S422, target information sent by the terminal device is received. The target information can be information obtained by the terminal device by encrypting third verifiable information, a first timestamp corresponding to the third verifiable information, valid time of a vehicle control instruction, and fourth verifiable information based on the third public key of the in-vehicle device, the third verifiable information can be a random number that is of a predetermined bit quantity, that corresponds to the vehicle control instruction, and that is generated by the terminal device based on a predetermined random number generation algorithm, and the fourth verifiable information can be information obtained by the terminal device by signing the third verifiable information, the first timestamp, and the valid time based on a fourth private key of the user.

In S424, the target information is processed based on a third private key of the in-vehicle device to obtain the third verifiable information, the first timestamp, the valid time, and the fourth verifiable information.

In S426, the fourth verifiable information is processed based on a fourth public key of the user, the third verifiable information, the first timestamp, and the valid time, and the third verifiable information, the first timestamp, and the valid time are stored when verification succeeds. The in-vehicle device can sign the third verifiable information, the first timestamp, and the valid time by using the fourth public key, to obtain corresponding signature information, perform matching verification on the obtained signature information and the received fourth verifiable information, and store the third verifiable information, the first timestamp, and the valid time when the verification succeeds.

In S428, a first encrypted instruction sent by the terminal device is processed based on the stored third verifiable information to obtain the vehicle control instruction. The first encrypted instruction can be an instruction obtained by the terminal device by encrypting the vehicle control instruction based on the third verifiable information.

In S430, a second timestamp is verified based on the stored first timestamp and valid time, and the vehicle control instruction is executed when the verification succeeds. For example, it can be determined whether the second timestamp is greater than the first timestamp. If the second timestamp is less than the first timestamp, it can be considered that the received vehicle control instruction is at risk of being tampered with in a transmission process. Therefore, predetermined alarm information can be sent to the first server or the terminal device. If the second timestamp is not less than the first timestamp and the second timestamp falls within a time range determined based on the first timestamp and the valid time, it can be determined that the received vehicle control instruction is not at risk of being tampered with, and the vehicle control instruction can be executed.

In addition, to ensure verification validity of the second timestamp, a Real_Time Clock (RTC) can be further installed in the in-vehicle device.

According to the privacy-protection-based verification method provided in this embodiment of this specification, target verification information corresponding to a terminal device and an in-vehicle device and a pre-constructed certificate chain that are sent by a first server are received, where the certificate chain is a multi-level certificate chain generated based on information of the first server, a predetermined key of the first server, device information of the terminal device, a predetermined key of the terminal device, device information of the in-vehicle device, and a predetermined key of the in-vehicle device; the certificate chain and the target verification information are verified based on the predetermined key of the in-vehicle device to obtain a verification result; and when the verification result is that the verification succeeds, a processed vehicle control instruction sent by the terminal device is processed based on the target verification information to obtain a vehicle control instruction, and the vehicle control instruction is executed, where the processed vehicle control instruction is an instruction obtained by the terminal device by processing the vehicle control instruction based on the target verification information. As such, the target verification information is verification information that corresponds to the terminal device and the in-vehicle device and that is generated by the first server, and the certificate chain is a certificate chain including related information of the first server, the terminal device, and the in-vehicle device. Therefore, the terminal device and the in-vehicle device can separately perform identity verification on the local party and the other party (the terminal device) by using the target verification information and the certificate chain; and when a verification result is that the verification succeeds, process the vehicle control instruction by using the target verification information, thereby improving security of the vehicle control instruction in a transmission process.

### Embodiment 5

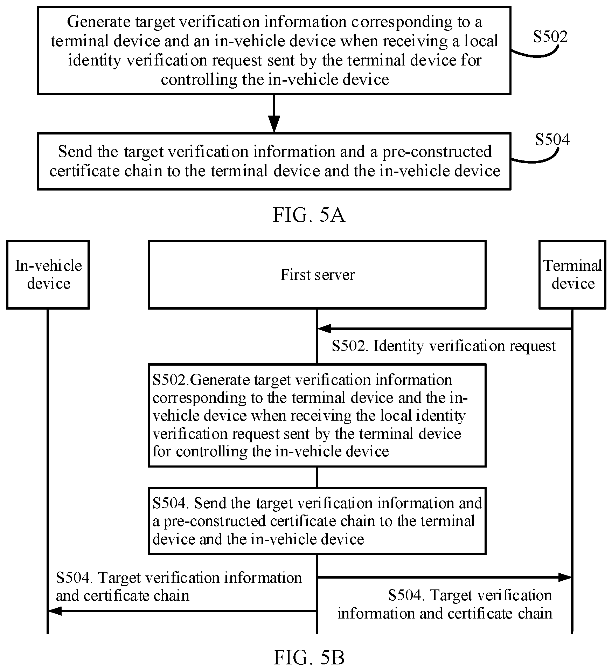

As shown in FIG. 5A and FIG. 5B, this embodiment of this specification provides a privacy-protection-based verification method. The method can be executed by a first server. The server can be an independent server, or can be a server cluster including a plurality of servers. The method can specifically include the following steps. In S502, target verification information corresponding to a terminal device and an in-vehicle device is generated when a local identity verification request sent by the terminal device for controlling the in-vehicle device is received.

In S504, the target verification information and a pre-constructed certificate chain are sent to the terminal device and the in-vehicle device, so that the terminal device processes a vehicle control instruction based on the target verification information after succeeding in verifying the certificate chain and the target verification information based on a predetermined key of the terminal device, so that the in-vehicle device processes, based on the target verification information, a processed vehicle control instruction sent by the terminal device after succeeding in verifying the certificate chain and the target verification information based on a predetermined key of the in-vehicle device.

According to the privacy-protection-based verification method provided in this embodiment of this specification, target verification information corresponding to a terminal device and an in-vehicle device is generated when a local identity verification request sent by the terminal device for controlling the in-vehicle device is received; and the target verification information and a pre-constructed certificate chain are sent to the terminal device and the in-vehicle device, so that the terminal device processes a vehicle control instruction based on the target verification information after succeeding in verifying the certificate chain and the target verification information based on a predetermined key of the terminal device, so that the in-vehicle device processes, based on the target verification information, a processed vehicle control instruction sent by the terminal device after succeeding in verifying the certificate chain and the target verification information based on a predetermined key of the in-vehicle device. As such, the target verification information is verification information that corresponds to the terminal device and the in-vehicle device and that is generated by the first server, and the certificate chain is a certificate chain including related information of the first server, the terminal device, and the in-vehicle device. Therefore, the terminal device and the in-vehicle device can separately perform identity verification on the local party and the other party (the in-vehicle device or the terminal device) by using the target verification information and the certificate chain; and when a verification result is that the verification succeeds, process the vehicle control instruction by using the target verification information, thereby improving security of the vehicle control instruction in a transmission process.

### Embodiment 6

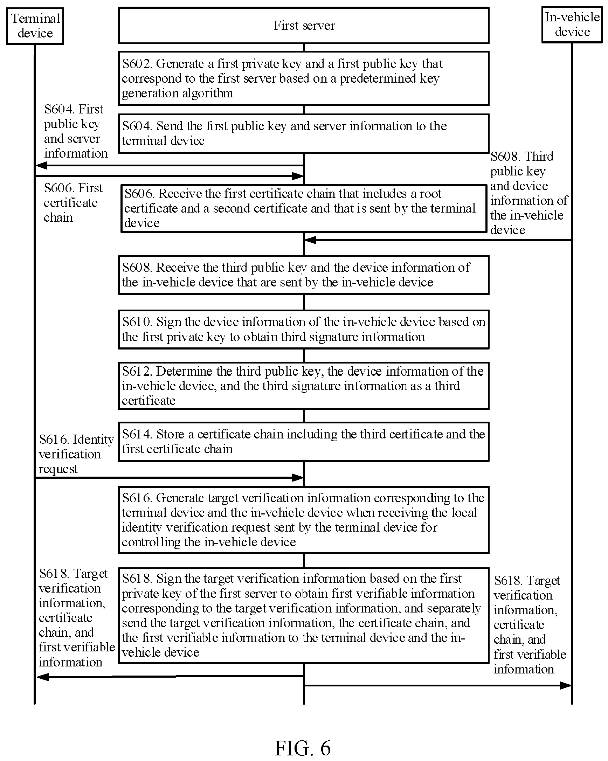

As shown in FIG. 6, this embodiment of this specification provides a privacy-protection-based verification method. The method can be executed by a first server. The server can be an independent server, or can be a server cluster including a plurality of servers. The method can specifically include the following steps. In S602, a first private key and a first public key that correspond to the first server are generated based on a predetermined key generation algorithm.

In S604, the first public key and server information are sent to a terminal device.

In S606, a first certificate chain that includes a root certificate and a second certificate and that is sent by the terminal device is received. The root certificate can be determined by the terminal device based on a second public key, device information of the terminal device, and first signature information, the first signature information can be obtained by the terminal device by signing the device information of the terminal device based on a second private key, the second public key and the second private key can be keys that correspond to the terminal device and that are generated by the terminal device based on the predetermined key generation algorithm, the second certificate can be determined by the terminal device based on the first public key, the server information, and second signature information, and the second signature information can be obtained by the terminal device by signing the server information based on the second private key;
In S608, a third public key and device information of the in-vehicle device that are sent by the in-vehicle device are received. The third public key can be a key that corresponds to the in-vehicle device and that is generated by the in-vehicle device based on the predetermined key generation algorithm.

In S610, the device information of the in-vehicle device is signed based on the first private key to obtain third signature information.

In S612, the third public key, the device information of the in-vehicle device, and the third signature information are determined as a third certificate.

In S614, a certificate chain including the third certificate and the first certificate chain is stored.

In S616, target verification information corresponding to the terminal device and the in-vehicle device is generated when a local identity verification request sent by the terminal device for controlling the in-vehicle device is received.

In S618, the target verification information is signed based on the first private key of the first server to obtain first verifiable information corresponding to the target verification information, and the target verification information, the certificate chain, and the first verifiable information are separately sent to the terminal device and the in-vehicle device, so that the terminal device processes a vehicle control instruction based on the target verification information after succeeding in verifying the target verification information, the certificate chain, and the first verifiable information, so that the in-vehicle device processes, based on the target verification information, a processed vehicle control instruction sent by the terminal device after succeeding in verifying the first verifiable information, the certificate chain, and the target verification information based on a predetermined key of the in-vehicle device.

According to the privacy-protection-based verification method provided in this embodiment of this specification, target verification information corresponding to a terminal device and an in-vehicle device is generated when a local identity verification request sent by the terminal device for controlling the in-vehicle device is received; and the target verification information and a pre-constructed certificate chain are sent to the terminal device and the in-vehicle device, so that the terminal device processes a vehicle control instruction based on the target verification information after succeeding in verifying the certificate chain and the target verification information based on a predetermined key of the terminal device, so that the in-vehicle device processes, based on the target verification information, a processed vehicle control instruction sent by the terminal device after succeeding in verifying the certificate chain and the target verification information based on a predetermined key of the in-vehicle device. As such, the target verification information is verification information that corresponds to the terminal device and the in-vehicle device and that is generated by the first server, and the certificate chain is a certificate chain including related information of the first server, the terminal device, and the in-vehicle device. Therefore, the terminal device and the in-vehicle device can separately perform identity verification on the local party and the other party (the in-vehicle device or the terminal device) by using the target verification information and the certificate chain; and when a verification result is that the verification succeeds, process the vehicle control instruction by using the target verification information, thereby improving security of the vehicle control instruction in a transmission process.

### Embodiment 7

This embodiment of this specification provides a privacy-protection-based verification system. The privacy-protection-based verification system includes a terminal device, an in-vehicle device, and a first server. The terminal device can be configured to send a local identity verification request for controlling the in-vehicle device to the first server.

The first server can be configured to generate target verification information corresponding to the terminal device and the in-vehicle device, and send the target verification information and a pre-constructed certificate chain to the terminal device and the in-vehicle device, where the certificate chain can be a multi-level certificate chain generated based on information of the first server, a predetermined key of the first server, device information of the terminal device, a predetermined key of the terminal device, device information of the in-vehicle device, and a predetermined key of the in-vehicle device.

The terminal device can be configured to verify the certificate chain and the target verification information based on the predetermined key of the terminal device to obtain a first verification result; and when the first verification result is that the verification succeeds, process a vehicle control instruction based on the target verification information, and send a processed vehicle control instruction to the in-vehicle device.

The in-vehicle device can be configured to verify the certificate chain and the target verification information based on the predetermined key of the in-vehicle device to obtain a second verification result; and when the second verification result is that the verification succeeds, process the received processed vehicle control instruction based on the target verification information to obtain the vehicle control instruction, and execute the vehicle control instruction.

According to the privacy-protection-based verification system provided in this embodiments of this specification, the target verification information is verification information that corresponds to the terminal device and the in-vehicle device and that is generated by the first server, and the certificate chain is a certificate chain including related information of the first server, the terminal device, and the in-vehicle device. Therefore, the terminal device and the in-vehicle device can separately perform identity verification on the local party and the other party (the in-vehicle device or the terminal device) by using the target verification information and the certificate chain; and when a verification result is that the verification succeeds, process the vehicle control instruction by using the target verification information, thereby improving security of the vehicle control instruction in a transmission process.

### Embodiment 8

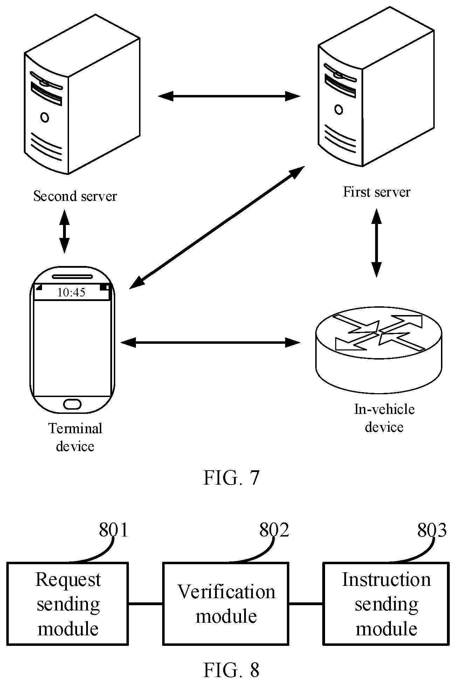

This embodiment of this specification provides another privacy-protection-based verification system. The privacy-protection-based verification system includes all functional units of the privacy-protection-based verification system in Embodiment 7, where the privacy-protection-based verification system in Embodiment 7 is improved on the basis of the privacy-protection-based verification system in Embodiment 7. Improvement content is as follows: As shown in FIG. 7, for example, a terminal device is a mobile terminal device, and a first server is a digital key management platform server.

An application (or a mini program that is mounted in an application and that can be used to control a vehicle) used to control a vehicle can be installed in the terminal device. A user can run the application by using the terminal device, to control a vehicle to be controlled (for example, start the vehicle, lock the vehicle, or start an in-vehicle air conditioner, audio equipment, etc.) by using an in-vehicle device installed in the vehicle to be controlled.

For the in-vehicle device, in a production line phase, a software development kit (SDK) can be preconfigured in the vehicle to be controlled.

The first server can generate a first private key and a first public key that correspond to the first server based on a predetermined key generation algorithm, and send the first public key and server information to the terminal device.

The terminal device can generate a second private key and a second public key that correspond to the terminal device based on the predetermined key generation algorithm, where the second private key and the second public key can be root keys. The terminal device can sign device information of the terminal device based on the second private key to obtain first signature information, and then generate a root certificate based on the second public key, the device information of the terminal device, and the first signature information. The terminal device signs the server information based on the second private key to obtain second signature information, then generate a second certificate based on the first public key, the server information, and the second signature information, and finally send a first certificate chain including the root certificate and the second certificate to the first server.

The in-vehicle device can obtain product information such as information of a manufacturer producing the vehicle to be controlled, a product model of the in-vehicle device, and vehicle information (such as a vehicle model and a vehicle brand) of the vehicle to be controlled, and send the product information to the terminal device. The terminal device can generate and store device information of the in-vehicle device based on the product information. In addition, the in-vehicle device can further obtain identification information such as a device ID, an SN, and a MAC address of the terminal device, and generate the device information of the terminal device based on the identification information. The in-vehicle device can further generate the device information corresponding to the terminal device based on the identification information such as the device ID, the SN, and the MAC address of the terminal device according to a predetermined identification information generation rule, and send the device information of the terminal device to the first server. The first server can burn the device information of the terminal device, the SDK, and the second public key of the terminal device to the in-vehicle device.

In addition, the first server can generate corresponding token information based on the device information of the terminal device that is sent by the in-vehicle device, and send the token information to the in-vehicle device. The in-vehicle device can generate a two-dimensional code based on the token information, and the manufacturer of the vehicle to be controlled can place the two-dimensional code in the vehicle to be controlled.

When the vehicle to be controlled is powered on for the first time, the in-vehicle device can generate a third public key and a third private key that correspond to the in-vehicle device based on the predetermined key generation algorithm. The in-vehicle device can send the third public key and the device information of the in-vehicle device (such as an international mobile equipment identity (IMEI) and a MAC address) to the first server.

The first server can sign the device information of the in-vehicle device based on the first private key to obtain third signature information; and then determine the third public key, the device information of the in-vehicle device, and the third signature information as a third certificate, and store a certificate chain including the third certificate and the first certificate chain.

When controlling the vehicle to be controlled by using the application for the first time, the terminal device can implement binding between the terminal device and the to-be-controlled vehicle by using the two-dimensional code in the vehicle to be controlled. For example, the user can scan the two-dimensional code in the vehicle to be controlled by using the terminal device, and the terminal device can identify the two-dimensional code. After obtaining the device information of the terminal device that is included in the two-dimensional code, the terminal device sends an identity verification request for the user to a second server (the second server can be a server corresponding to the application of the terminal device), receives a target token generated by the second server based on the identity verification request, performs identity verification on the user based on the target token, and generates a fourth public key and a fourth private key that correspond to the user based on the predetermined key generation algorithm when an identity verification result is that the verification succeeds.

The terminal device can send the fourth public key and the device information of the terminal device that is identified in the two-dimensional code to the first server. The first server can perform matching verification on stored device information of the terminal device and the received device information of the terminal device, and store the fourth public key of the user after the verification succeeds.

The terminal device can generate target verification information based on the fourth public key of the user, the third public key of the in-vehicle device, and the device information of the in-vehicle device, encrypt the target verification information by using the first private key of the first server to obtain first verifiable information, and separately send the first verifiable information and the certificate chain to the in-vehicle device and the terminal device.

The terminal device can verify the root certificate and the second certificate in the certificate chain based on the first public key of the first server and the second public key of the terminal device to obtain a first verification result, verify the first verifiable information based on the first public key of the first server and the target verification information to obtain a second verification result, and finally determine a verification result based on the first verification result and the second verification result.

When the verification result is that verification succeeds, the terminal device can store the target verification information, that is, the terminal device can store the device information of the in-vehicle device and the third public key of the in-vehicle device.

In addition, the in-vehicle device can also verify the certificate chain based on the third public key of the in-vehicle device to obtain a third verification result, then verify the first verifiable information based on the first public key of the first server and the target verification information to obtain a fourth verification result, and finally determine a verification result based on the third verification result and the fourth verification result. When the verification result is that verification succeeds, the in-vehicle device stores the fourth public key of the user.

The terminal device can generate third verifiable information for a vehicle control instruction, a first timestamp corresponding to the third verifiable information, and valid time of the vehicle control instruction. The third verifiable information can be a random number that is of a predetermined bit quantity, that corresponds to the vehicle control instruction, and that is generated by the terminal device based on a predetermined random number generation algorithm.

The terminal device can sign the third verifiable information, the first timestamp, and the valid time based on the fourth private key of the user to obtain fourth verifiable information.

Then, the terminal device encrypts the third verifiable information, the first timestamp, the valid time, and the fourth verifiable information based on the stored third public key of the in-vehicle device to obtain target information, and sends the target information to the in-vehicle device.

The in-vehicle device can process the target information based on the local third private key to obtain the third verifiable information, the first timestamp, the valid time, and the fourth verifiable information.

The in-vehicle device can process the fourth verifiable information based on the fourth public key of the user, the third verifiable information, the first timestamp, and the valid time, and store the third verifiable information, the first timestamp, and the valid time when verification succeeds.

The terminal device can encrypt the vehicle control instruction based on the third verifiable information to obtain a first encrypted instruction, and send the first encrypted instruction and a second timestamp corresponding to the vehicle control instruction to the in-vehicle device.

The in-vehicle device can process the first encrypted instruction based on the stored third verifiable information to obtain the vehicle control instruction, verify the second timestamp based on the stored first timestamp and valid time, and execute the vehicle control instruction when the verification succeeds. In addition, the first timestamp and the second timestamp can be encrypted by using an HMAC algorithm, to improve security in a data transmission process.

As such, because the third verifiable information is the random number that is of the predetermined bit quantity, that corresponds to the vehicle control instruction, and that is generated by the terminal device based on the predetermined random number generation algorithm, security in an information transmission process can be improved by using the third verifiable information. In addition, the terminal device can further implement data transmission with the first server by using the second server, that is, the second server can transmit, to the first server by using an open data invocation interface, received information sent by the terminal device.

According to the privacy-protection-based verification system provided in this embodiments of this specification, the target verification information is verification information that corresponds to the terminal device and the in-vehicle device and that is generated by the first server, and the certificate chain is a certificate chain including related information of the first server, the terminal device, and the in-vehicle device. Therefore, the terminal device and the in-vehicle device can separately perform identity verification on the local party and the other party (the in-vehicle device or the terminal device) by using the target verification information and the certificate chain; and when a verification result is that the verification succeeds, process the vehicle control instruction by using the target verification information, thereby improving security of the vehicle control instruction in a transmission process.

### Embodiment 9

The privacy-protection-based verification methods provided in the embodiments of this specification are described above. Based on the same idea, this embodiment of this specification further provides a privacy-protection-based verification apparatus, as shown in FIG. 8. The privacy-protection-based verification apparatus includes a request sending module 801, a verification module 802, and an instruction sending module 803. The request sending module 801 is configured to send a local identity verification request for controlling an in-vehicle device to a first server, where the first server is configured to generate target verification information corresponding to the privacy-protection-based verification apparatus and the in-vehicle device for the identity verification request. The verification module 802 is configured to receive the target verification information and a pre-constructed certificate chain that are sent by the first server, and verify the certificate chain and the target verification information based on a predetermined key of the privacy-protection-based verification apparatus to obtain a verification result, where the certificate chain is a multi-level certificate chain generated based on information of the first server, a predetermined key of the first server, device information of the privacy-protection-based verification apparatus, the predetermined key of the privacy-protection-based verification apparatus, device information of the in-vehicle device, and a predetermined key of the in-vehicle device. The instruction sending module 803 is configured to: when the verification result is that the verification succeeds, process a vehicle control instruction based on the target verification information, and send a processed vehicle control instruction to the in-vehicle device, so that the in-vehicle device processes the vehicle control instruction based on the target verification information and the certificate chain.

In this embodiment of this specification, the apparatus further includes an information receiving module, configured to receive the server information of the first server and a first public key of the first server, where the first public key is a key that corresponds to the first server and that is generated by the first server based on a predetermined key generation algorithm; a first generation module, configured to generate a second private key and a second public key that correspond to the privacy-protection-based verification apparatus based on the predetermined key generation algorithm; a first processing module, configured to sign the device information of the privacy-protection-based verification apparatus based on the second private key to obtain first signature information; a second generation module, configured to generate a root certificate based on the second public key, the device information of the privacy-protection-based verification apparatus, and the first signature information; a second processing module, configured to sign the server information based on the second private key to obtain second signature information; a third generation module, configured to generate a second certificate based on the first public key, the server information, and the second signature information; and a certificate sending module, configured to send a first certificate chain including the root certificate and the second certificate to the first server, so that the first server constructs the certificate chain based on the first certificate chain, the device information of the in-vehicle device, and the predetermined key of the in-vehicle device.

In this embodiment of this specification, the apparatus further includes a fourth generation module, configured to generate a fourth public key corresponding to a user based on the predetermined key generation algorithm; and an information sending module, configured to send the fourth public key and the device information of the privacy-protection-based verification apparatus to the first server, so that the first server generates the target verification information based on the device information of the privacy-protection-based verification apparatus, the fourth public key, the predetermined key of the in-vehicle device, and the device information of the in-vehicle device.

In this embodiment of this specification, the verification module 802 is configured to receive first verifiable information sent by the first server, where the first verifiable information is information that corresponds to the target verification information and that is obtained by the first server by encrypting the target verification information based on a first private key of the first server; verify the root certificate and the second certificate in the certificate chain based on the first public key of the first server and the second public key of the privacy-protection-based verification apparatus to obtain a first verification result; verify the first verifiable information based on the first public key of the first server and the target verification information to obtain a second verification result; and determine the verification result based on the first verification result and the second verification result.

In this embodiment of this specification, the instruction sending module 803 is configured to encrypt the vehicle control instruction based on a fourth private key of the user to obtain second verifiable information, where the fourth private key is a private key that corresponds to the fourth public key and that is generated by the privacy-protection-based verification apparatus based on the predetermined key generation algorithm; receive a third public key of the in-vehicle device, where the third public key is a key that corresponds to the in-vehicle device and that is generated by the in-vehicle device based on the predetermined key generation algorithm; and encrypt the vehicle control instruction and the second verifiable information based on the third public key of the in-vehicle device to obtain an encrypted vehicle control instruction, and send the encrypted vehicle control instruction to the in-vehicle device, so that the in-vehicle device processes the vehicle control instruction based on the fourth public key and a third private key, where the third private key is a private key that corresponds to the third public key and that is generated by the in-vehicle device.

In this embodiment of this specification, the instruction sending module 803 is configured to generate third verifiable information for the vehicle control instruction, a first timestamp corresponding to the third verifiable information, and valid time of the vehicle control instruction, where the third verifiable information is a random number that is of a predetermined bit quantity, that corresponds to the vehicle control instruction, and that is generated by the privacy-protection-based verification apparatus based on a predetermined random number generation algorithm; sign the third verifiable information, the first timestamp, and the valid time based on a fourth private key of the user to obtain fourth verifiable information; receive a third public key of the in-vehicle device, where the third public key is a key that corresponds to the in-vehicle device and that is generated by the in-vehicle device based on the predetermined key generation algorithm; encrypt the third verifiable information, the first timestamp, the valid time, and the fourth verifiable information based on the third public key of the in-vehicle device to obtain target information, and send the target information to the in-vehicle device; encrypt the vehicle control instruction based on the third verifiable information to obtain a first encrypted instruction; and send the first encrypted instruction and a second timestamp corresponding to the vehicle control instruction to the in-vehicle device, so that the in-vehicle device processes the first encrypted instruction based on the first encrypted instruction, the second timestamp, and the stored target information.

In this embodiment of this specification, the instruction sending module 803 is configured to send an identity verification request for the user to a second server; receive a target token generated by the second server based on the identity verification request; and perform identify verification on the user based on the target token, and generate the fourth public key corresponding to the user based on the predetermined key generation algorithm when an identity verification result is that the verification succeeds.

According to the privacy-protection-based verification apparatus provided in this embodiment of this specification, a local identity verification request for controlling an in-vehicle device is sent to a first server, where the first server is configured to generate target verification information corresponding to a terminal device and the in-vehicle device for the identity verification request; the target verification information and a pre-constructed certificate chain that are sent by the first server are received, and the certificate chain and the target verification information are verified based on a predetermined key of the terminal device to obtain a verification result, where the certificate chain is a multi-level certificate chain generated based on information of the first server, a predetermined key of the first server, device information of the terminal device, the predetermined key of the terminal device, device information of the in-vehicle device, and a predetermined key of the in-vehicle device; and when the verification result is that the verification succeeds, a vehicle control instruction is processed based on the target verification information, and a processed vehicle control instruction is sent to the in-vehicle device, so that the in-vehicle device processes the vehicle control instruction based on the target verification information and the certificate chain. As such, the target verification information is verification information that corresponds to the terminal device and the in-vehicle device and that is generated by the first server, and the certificate chain is a certificate chain including related information of the first server, the terminal device, and the in-vehicle device. Therefore, the terminal device and the in-vehicle device can separately perform identity verification on the local party and the other party (the in-vehicle device) by using the target verification information and the certificate chain; and when a verification result is that the verification succeeds, process the vehicle control instruction by using the target verification information, thereby improving security of the vehicle control instruction in a transmission process.

### Embodiment 10

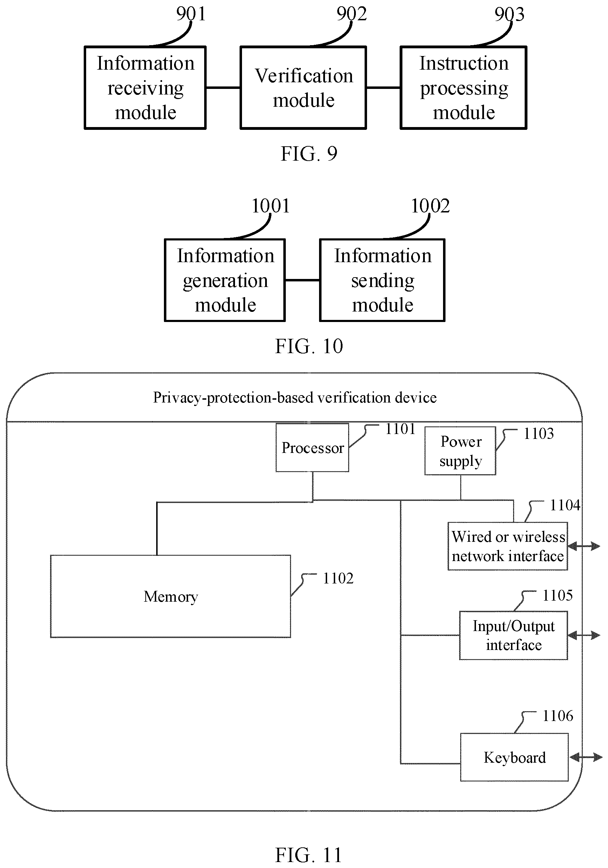

Based on the same idea, this embodiment of this specification further provides a privacy-protection-based verification apparatus, as shown in FIG. 9. The privacy-protection-based verification apparatus includes an information receiving module 901, a verification module 902, and an instruction processing module 903. The information receiving module is configured to receive target verification information corresponding to a terminal device and the privacy-protection-based verification apparatus and a pre-constructed certificate chain that are sent by a first server, where the certificate chain is a multi-level certificate chain generated based on information of the first server, a predetermined key of the first server, device information of the terminal device, a predetermined key of the terminal device, device information of the privacy-protection-based verification apparatus, and a predetermined key of the privacy-protection-based verification apparatus. The verification module is configured to verify the certificate chain and the target verification information based on the predetermined key of the privacy-protection-based verification apparatus to obtain a verification result. The instruction processing module is configured to: when the verification result is that the verification succeeds, process, based on the target verification information, a processed vehicle control instruction sent by the terminal device, to obtain a vehicle control instruction, and execute the vehicle control instruction, where the processed vehicle control instruction is an instruction obtained by the terminal device by processing the vehicle control instruction based on the target verification information.

In this embodiment of this specification, the apparatus further includes a generation module, configured to generate a third public key corresponding to the privacy-protection-based verification apparatus based on a predetermined key generation algorithm; and an information sending module, configured to send the third public key and the device information of the privacy-protection-based verification apparatus to the first server, so that the first server generates the certificate chain based on the third public key, the device information of the privacy-protection-based verification apparatus, the information of the first server, the predetermined key of the first server, the device information of the terminal device, and the predetermined key of the terminal device.

In this embodiment of this specification, the instruction processing module 903 is configured to receive a fourth public key sent by the terminal device, where the fourth public key is a key that corresponds to a user of the terminal device and that is generated by the terminal device based on the predetermined key generation algorithm; process, based on a third private key of the privacy-protection-based verification apparatus, the processed vehicle control instruction sent by the terminal device, to obtain the vehicle control instruction and second verifiable information, where the processed vehicle control instruction is obtained by the terminal device by encrypting the vehicle control instruction based on the third public key of the privacy-protection-based verification apparatus, the third private key is a private key that corresponds to the third public key and that is generated by the privacy-protection-based verification apparatus based on the predetermined key generation algorithm, the second verifiable information is information obtained by the terminal device by encrypting the vehicle control instruction based on a fourth private key of the user, and the fourth private key is a private key that corresponds to the fourth public key and that is generated by the terminal device based on the predetermined key generation algorithm; and verify the second verifiable information based on the vehicle control instruction and the fourth public key of the user, and execute the vehicle control instruction when the verification succeeds.

In this embodiment of this specification, the instruction processing module 903 is configured to receive a fourth public key sent by the terminal device, where the fourth public key is a key that corresponds to a user of the terminal device and that is generated by the terminal device based on the predetermined key generation algorithm; receive target information sent by the terminal device, where the target information is information obtained by the terminal device by encrypting third verifiable information, a first timestamp corresponding to the third verifiable information, valid time of the vehicle control instruction, and fourth verifiable information based on the third public key of the privacy-protection-based verification apparatus, the third verifiable information is a random number that is of a predetermined bit quantity, that corresponds to the vehicle control instruction, and that is generated by the terminal device based on a predetermined random number generation algorithm, and the fourth verifiable information is information obtained by the terminal device by signing the third verifiable information, the first timestamp, and the valid time based on a fourth private key of the user; process the target information based on a third private key of the privacy-protection-based verification apparatus to obtain the third verifiable information, the first timestamp, the valid time, and the fourth verifiable information; process the fourth verifiable information based on the fourth public key of the user, the third verifiable information, the first timestamp, and the valid time, and store the third verifiable information, the first timestamp, and the valid time when verification succeeds; process, based on the stored third verifiable information, a first encrypted instruction sent by the terminal device, to obtain the vehicle control instruction, where the first encrypted instruction is an instruction obtained by the terminal device by encrypting the vehicle control instruction based on the third verifiable information; and verify a second timestamp based on the stored first timestamp and valid time, and execute the vehicle control instruction when the verification succeeds.

According to the privacy-protection-based verification apparatus provided in this embodiment of this specification, target verification information corresponding to a terminal device and an in-vehicle device and a pre-constructed certificate chain that are sent by a first server are received, where the certificate chain is a multi-level certificate chain generated based on information of the first server, a predetermined key of the first server, device information of the terminal device, a predetermined key of the terminal device, device information of the in-vehicle device, and a predetermined key of the in-vehicle device; the certificate chain and the target verification information are verified based on the predetermined key of the in-vehicle device to obtain a verification result; and when the verification result is that the verification succeeds, a processed vehicle control instruction sent by the terminal device is processed based on the target verification information to obtain a vehicle control instruction, and the vehicle control instruction is executed, where the processed vehicle control instruction is an instruction obtained by the terminal device by processing the vehicle control instruction based on the target verification information. As such, the target verification information is verification information that corresponds to the terminal device and the in-vehicle device and that is generated by the first server, and the certificate chain is a certificate chain including related information of the first server, the terminal device, and the in-vehicle device. Therefore, the terminal device and the in-vehicle device can separately perform identity verification on the local party and the other party (the terminal device) by using the target verification information and the certificate chain; and when a verification result is that the verification succeeds, process the vehicle control instruction by using the target verification information, thereby improving security of the vehicle control instruction in a transmission process.

### Embodiment 11

Based on the same idea, this embodiment of this specification further provides a privacy-protection-based verification apparatus, as shown in FIG. 10. The privacy-protection-based verification apparatus includes an information generation module 1001 and an information sending module 1002. The information generation module 1001 is configured to generate target verification information corresponding to a terminal device and an in-vehicle device when receiving a local identity verification request sent by the terminal device for controlling the in-vehicle device. The information sending module 1002 is configured to send the target verification information and a pre-constructed certificate chain to the terminal device and the in-vehicle device, so that the terminal device processes a vehicle control instruction based on the target verification information after succeeding in verifying the certificate chain and the target verification information based on a predetermined key of the terminal device, so that the in-vehicle device processes, based on the target verification information, a processed vehicle control instruction sent by the terminal device after succeeding in verifying the certificate chain and the target verification information based on a predetermined key of the in-vehicle device, where the certificate chain is a multi-level certificate chain generated based on information of the privacy-protection-based verification apparatus, a predetermined key of the privacy-protection-based verification apparatus, device information of the terminal device, the predetermined key of the terminal device, device information of the in-vehicle device, and the predetermined key of the in-vehicle device.

In this embodiment of this specification, the apparatus further includes a first generation module, configured to generate a first private key and a first public key that correspond to the privacy-protection-based verification apparatus based on a predetermined key generation algorithm; a data sending module, configured to send the first public key and the server information to the terminal device; a certificate receiving module, configured to receive a first certificate chain that includes a root certificate and a second certificate and that is sent by the terminal device, where the root certificate is determined by the terminal device based on a second public key, the device information of the terminal device, and first signature information, the first signature information is obtained by the terminal device by signing the device information of the terminal device based on a second private key, the second public key and the second private key are keys that correspond to the terminal device and that are generated by the terminal device based on the predetermined key generation algorithm, the second certificate is determined by the terminal device based on the first public key, the server information, and second signature information, and the second signature information is obtained by the terminal device by signing the server information based on the second private key; an information receiving module, configured to receive a third public key and the device information of the in-vehicle device that are sent by the in-vehicle device, where the third public key is a key that corresponds to the in-vehicle device and that is generated by the in-vehicle device based on the predetermined key generation algorithm; a second generation module, configured to sign the device information of the in-vehicle device based on the first private key to obtain third signature information; and a third generation module, configured to determine the third public key, the device information of the in-vehicle device, and the third signature information as a third certificate; and a storage module, configured to store the certificate chain including the third certificate and the first certificate chain.

In this embodiment of this specification, the information sending module 1002 is configured to sign the target verification information based on the first private key of the privacy-protection-based verification apparatus to obtain first verifiable information corresponding to the target verification information, and separately send the target verification information, the certificate chain, and the first verifiable information to the terminal device and the in-vehicle device, so that the terminal device processes the vehicle control instruction based on the target verification information after succeeding in verifying the target verification information, the certificate chain, and the first verifiable information, so that the in-vehicle device processes, based on the target verification information, the processed vehicle control instruction sent by the terminal device after succeeding in verifying the first verifiable information, the certificate chain, and the target verification information based on the predetermined key of the in-vehicle device.

According to the privacy-protection-based verification apparatus provided in this embodiment of this specification, target verification information corresponding to a terminal device and an in-vehicle device is generated when a local identity verification request sent by the terminal device for controlling the in-vehicle device is received; and the target verification information and a pre-constructed certificate chain are sent to the terminal device and the in-vehicle device, so that the terminal device processes a vehicle control instruction based on the target verification information after succeeding in verifying the certificate chain and the target verification information based on a predetermined key of the terminal device, so that the in-vehicle device processes, based on the target verification information, a processed vehicle control instruction sent by the terminal device after succeeding in verifying the certificate chain and the target verification information based on a predetermined key of the in-vehicle device. As such, the target verification information is verification information that corresponds to the terminal device and the in-vehicle device and that is generated by the first server, and the certificate chain is a certificate chain including related information of the first server, the terminal device, and the in-vehicle device. Therefore, the terminal device and the in-vehicle device can separately perform identity verification on the local party and the other party (the in-vehicle device or the terminal device) by using the target verification information and the certificate chain; and when a verification result is that the verification succeeds, process the vehicle control instruction by using the target verification information, thereby improving security of the vehicle control instruction in a transmission process.

### Embodiment 12

Based on the same idea, this embodiment of this specification further provides a privacy-protection-based verification device, as shown in FIG. 11. The privacy-protection-based verification device can be a blockchain node device provided in the previous embodiment. The privacy-protection-based verification device can greatly vary due to different configurations or performance, and can include one or more processors 1101 and one or more memories 1102. The memory 1102 can store one or more applications or data. The memory 1102 can be a transient memory or a persistent memory. The application stored in the memory 1102 can include one or more modules (not shown in the figure), and each module can include a series of computer-executable instructions in the privacy-protection-based verification device. Further, the processor 1101 can be disposed to communicate with the memory 1102 to execute the series of computer-executable instructions in the memory 1102 on the privacy-protection-based verification device. The privacy-protection-based verification device can further include one or more power supplies 1103, one or more wired or wireless network interfaces 1104, one or more input/output interfaces 1105, and one or more keyboards 1106.

Specifically, in this embodiment, the privacy-protection-based verification device includes a memory and one or more programs. The one or more programs are stored in the memory, the one or more programs can include one or more modules, each module can include a series of computer-executable instructions in the privacy-protection-based verification device, and one or more processors are configured to execute the one or more programs, including performing the following computer-executable instructions: sending a local identity verification request for controlling an in-vehicle device to a first server, where the first server is configured to generate target verification information corresponding to the privacy-protection-based verification device and the in-vehicle device for the identity verification request; receiving the target verification information and a pre-built certificate chain that are sent by the first server, and verifying the certificate chain and the target verification information based on a predetermined key of the privacy-protection-based verification device to obtain a verification result, where the certificate chain is a multi-level certificate chain generated based on information of the first server, a predetermined key of the first server, device information of the privacy-protection-based verification device, the predetermined key of the privacy-protection-based verification device, device information of the in-vehicle device, and a predetermined key of the in-vehicle device; and when the verification result is that the verification succeeds, processing a vehicle control instruction based on the target verification information, and sending a processed vehicle control instruction to the in-vehicle device, so that the in-vehicle device processes the vehicle control instruction based on the target verification information and the certificate chain.

Optionally, before the receiving the target verification information and a pre-constructed certificate chain that are sent by the first server, the method further includes: receiving the server information of the first server and a first public key of the first server, where the first public key is a key that corresponds to the first server and that is generated by the first server based on a predetermined key generation algorithm; generating a second private key and a second public key that correspond to the privacy-protection-based verification device based on the predetermined key generation algorithm; signing the device information of the privacy-protection-based verification device based on the second private key to obtain first signature information; generating a root certificate based on the second public key, the device information of the privacy-protection-based verification device, and the first signature information; signing the server information based on the second private key to obtain second signature information; generating a second certificate based on the first public key, the server information, and the second signature information; and sending a first certificate chain including the root certificate and the second certificate to the first server, so that the first server constructs the certificate chain based on the first certificate chain, the device information of the in-vehicle device, and the predetermined key of the in-vehicle device.

Optionally, before the receiving the target verification information and a pre-constructed certificate chain that are sent by the first server, the method further includes: generating a fourth public key corresponding to a user based on the predetermined key generation algorithm; and sending the fourth public key and the device information of the privacy-protection-based verification device to the first server, so that the first server generates the target verification information based on the device information of the privacy-protection-based verification device, the fourth public key, the predetermined key of the in-vehicle device, and the device information of the in-vehicle device.

Optionally, the verifying the certificate chain and the target verification information based on a predetermined key of the privacy-protection-based verification device to obtain a verification result includes: receiving first verifiable information sent by the first server, where the first verifiable information is information that corresponds to the target verification information and that is obtained by the first server by encrypting the target verification information based on a first private key of the first server; verifying the root certificate and the second certificate in the certificate chain based on the first public key of the first server and the second public key of the privacy-protection-based verification device to obtain a first verification result; verifying the first verifiable information based on the first public key of the first server and the target verification information to obtain a second verification result; and determining the verification result based on the first verification result and the second verification result.

Optionally, the processing a vehicle control instruction based on the target verification information, and sending a processed vehicle control instruction to the in-vehicle device includes: encrypting the vehicle control instruction based on a fourth private key of the user to obtain second verifiable information, where the fourth private key is a private key that corresponds to the fourth public key and that is generated by the privacy-protection-based verification device based on the predetermined key generation algorithm; receiving a third public key of the in-vehicle device, where the third public key is a key that corresponds to the in-vehicle device and that is generated by the in-vehicle device based on the predetermined key generation algorithm; and encrypting the vehicle control instruction and the second verifiable information based on the third public key of the in-vehicle device to obtain an encrypted vehicle control instruction, and sending the encrypted vehicle control instruction to the in-vehicle device, so that the in-vehicle device processes the vehicle control instruction based on the fourth public key and a third private key, where the third private key is a private key that corresponds to the third public key and that is generated by the in-vehicle device.

Optionally, the processing a vehicle control instruction based on the target verification information, and sending a processed vehicle control instruction to the in-vehicle device includes: generating third verifiable information for the vehicle control instruction, a first timestamp corresponding to the third verifiable information, and valid time of the vehicle control instruction, where the third verifiable information is a random number that is of a predetermined bit quantity, that corresponds to the vehicle control instruction, and that is generated by the privacy-protection-based verification device based on a predetermined random number generation algorithm; signing the third verifiable information, the first timestamp, and the valid time based on a fourth private key of the user to obtain fourth verifiable information; receiving a third public key of the in-vehicle device, where the third public key is a key that corresponds to the in-vehicle device and that is generated by the in-vehicle device based on the predetermined key generation algorithm; encrypting the third verifiable information, the first timestamp, the valid time, and the fourth verifiable information based on the third public key of the in-vehicle device to obtain target information, and sending the target information to the in-vehicle device; encrypting the vehicle control instruction based on the third verifiable information to obtain a first encrypted instruction; and sending the first encrypted instruction and a second timestamp corresponding to the vehicle control instruction to the in-vehicle device, so that the in-vehicle device processes the first encrypted instruction based on the first encrypted instruction, the second timestamp, and the stored target information.

Optionally, the generating a fourth public key corresponding to a user based on the predetermined key generation algorithm includes: sending an identity verification request for the user to a second server; receiving a target token generated by the second server based on the identity verification request; and performing identify verification on the user based on the target token, and generating the fourth public key corresponding to the user based on the predetermined key generation algorithm when an identity verification result is that the verification succeeds.

In addition, the privacy-protection-based verification device includes a memory and one or more programs. The one or more programs are stored in the memory, the one or more programs can include one or more modules, each module can include a series of computer-executable instructions in the privacy-protection-based verification device, and one or more processors are configured to execute the one or more programs, including performing the following computer-executable instructions: receiving target verification information corresponding to a terminal device and the privacy-protection-based verification device and a pre-constructed certificate chain that are sent by a first server, where the certificate chain is a multi-level certificate chain generated based on information of the first server, a predetermined key of the first server, device information of the terminal device, a predetermined key of the terminal device, device information of the privacy-protection-based verification device, and a predetermined key of the privacy-protection-based verification device; verifying the certificate chain and the target verification information based on the predetermined key of the privacy-protection-based verification device; and after the verification succeeds, processing, based on the target verification information, a processed vehicle control instruction sent by the terminal device, to obtain a vehicle control instruction, and executing the vehicle control instruction, where the processed vehicle control instruction is an instruction obtained by the terminal device by processing the vehicle control instruction based on the target verification information.

Optionally, before the verifying the certificate chain and the target verification information based on the predetermined key of the privacy-protection-based verification device, the method further includes: generating a third public key corresponding to the privacy-protection-based verification device based on a predetermined key generation algorithm; sending the third public key and the device information of the privacy-protection-based verification device to the first server, so that the first server generates the certificate chain based on the third public key, the device information of the privacy-protection-based verification device, the information of the first server, the predetermined key of the first server, the device information of the terminal device, and the predetermined key of the terminal device.

Optionally, the verifying the certificate chain and the target verification information based on the predetermined key of the privacy-protection-based verification device to obtain a verification result includes: verifying the certificate chain based on the third public key of the privacy-protection-based verification device to obtain a third verification result; receiving a first public key and first verifiable information that are sent by the first server, where the first verifiable information is information that corresponds to the target verification information and that is obtained by the first server by signing the target verification information based on a first private key of the first server, and the first public key and the first private key are keys that correspond to the first server and that are generated by the first server based on the predetermined key generation algorithm; verifying the first verifiable information based on the first public key of the first server and the target verification information to obtain a fourth verification result; and determining the verification result based on the third verification result and the fourth verification result.

Optionally, the processing, based on the target verification information, a processed vehicle control instruction sent by the terminal device, to obtain a vehicle control instruction, and executing the vehicle control instruction includes: receiving a fourth public key sent by the terminal device, where the fourth public key is a key that corresponds to a user of the terminal device and that is generated by the terminal device based on the predetermined key generation algorithm; processing the processed vehicle control instruction based on a third private key of the privacy-protection-based verification device to obtain the vehicle control instruction and second verifiable information, where the processed vehicle control instruction is obtained by the terminal device by encrypting the vehicle control instruction based on the third public key of the privacy-protection-based verification device, the third private key is a private key that corresponds to the third public key and that is generated by the privacy-protection-based verification device based on the predetermined key generation algorithm, the second verifiable information is information obtained by the terminal device by encrypting the vehicle control instruction based on a fourth private key of the user, and the fourth private key is a private key that corresponds to the fourth public key and that is generated by the terminal device based on the predetermined key generation algorithm; and verifying the second verifiable information based on the vehicle control instruction and the fourth public key of the user, and executing the vehicle control instruction when the verification succeeds.

Optionally, the processing, based on the target verification information, a processed vehicle control instruction sent by the terminal device, to obtain a vehicle control instruction, and executing the vehicle control instruction includes: receiving a fourth public key sent by the terminal device, where the fourth public key is a key that corresponds to a user of the terminal device and that is generated by the terminal device based on the predetermined key generation algorithm; receiving target information sent by the terminal device, where the target information is information obtained by the terminal device by encrypting third verifiable information, a first timestamp corresponding to the third verifiable information, valid time of the vehicle control instruction, and fourth verifiable information based on the third public key of the privacy-protection-based verification device, the third verifiable information is a random number that is of a predetermined bit quantity, that corresponds to the vehicle control instruction, and that is generated by the terminal device based on a predetermined random number generation algorithm, and the fourth verifiable information is information obtained by the terminal device by signing the third verifiable information, the first timestamp, and the valid time based on a fourth private key of the user; processing the target information sent by the terminal device based on a third private key of the privacy-protection-based verification device to obtain the third verifiable information, the first timestamp, the valid time, and the fourth verifiable information; processing the fourth verifiable information based on the fourth public key of the user, the third verifiable information, the first timestamp, and the valid time, and storing the third verifiable information, the first timestamp, and the valid time when verification succeeds; processing, based on the stored third verifiable information, a first encrypted instruction sent by the terminal device, to obtain the vehicle control instruction, where the first encrypted instruction is an instruction obtained by the terminal device by encrypting the vehicle control instruction based on the third verifiable information; and verifying a second timestamp based on the stored first timestamp and valid time, and executing the vehicle control instruction when the verification succeeds.

In addition, the privacy-protection-based verification device includes a memory and one or more programs. The one or more programs are stored in the memory, the one or more programs can include one or more modules, each module can include a series of computer-executable instructions in the privacy-protection-based verification device, and one or more processors are configured to execute the one or more programs, including performing the following computer-executable instructions: generating target verification information corresponding to a terminal device and an in-vehicle device when receiving a local identity verification request sent by the terminal device for controlling the in-vehicle device; and sending the target verification information and a pre-constructed certificate chain to the terminal device and the in-vehicle device, so that the terminal device processes a vehicle control instruction based on the target verification information after succeeding in verifying the certificate chain and the target verification information based on a predetermined key of the terminal device, so that the in-vehicle device processes, based on the target verification information, a processed vehicle control instruction sent by the terminal device after succeeding in verifying the certificate chain and the target verification information based on a predetermined key of the in-vehicle device, where the certificate chain is a multi-level certificate chain generated based on information of the privacy-protection-based verification device, a predetermined key of the privacy-protection-based verification device, device information of the terminal device, the predetermined key of the terminal device, device information of the in-vehicle device, and the predetermined key of the in-vehicle device.

Optionally, before the sending the target verification information and a pre-constructed certificate chain to the terminal device and the in-vehicle device, the method further includes: generating a first private key and a first public key that correspond to the privacy-protection-based verification device based on a predetermined key generation algorithm; sending the first public key and the server information to the terminal device; receiving a first certificate chain that includes a root certificate and a second certificate and that is sent by the terminal device, where the root certificate is determined by the terminal device based on a second public key, the device information of the terminal device, and first signature information, the first signature information is obtained by the terminal device by signing the device information of the terminal device based on a second private key, the second public key and the second private key are keys that correspond to the terminal device and that are generated by the terminal device based on the predetermined key generation algorithm, the second certificate is determined by the terminal device based on the first public key, the server information, and second signature information, and the second signature information is obtained by the terminal device by signing the server information based on the second private key; receiving a third public key and the device information of the in-vehicle device that are sent by the in-vehicle device, where the third public key is a key that corresponds to the in-vehicle device and that is generated by the in-vehicle device based on the predetermined key generation algorithm; signing the device information of the in-vehicle device based on the first private key to obtain third signature information; determining the third public key, the device information of the in-vehicle device, and the third signature information as a third certificate; and storing the certificate chain including the third certificate and the first certificate chain.

Optionally, the sending the target verification information and a pre-constructed certificate chain to the terminal device and the in-vehicle device includes: signing the target verification information based on the first private key of the privacy-protection-based verification device to obtain first verifiable information corresponding to the target verification information, and separately sending the target verification information, the certificate chain, and the first verifiable information to the terminal device and the in-vehicle device, so that the terminal device processes the vehicle control instruction based on the target verification information after succeeding in verifying the target verification information, the certificate chain, and the first verifiable information, so that the in-vehicle device processes, based on the target verification information, the processed vehicle control instruction sent by the terminal device after succeeding in verifying the first verifiable information, the certificate chain, and the target verification information based on the predetermined key of the in-vehicle device.

According to the privacy-protection-based verification device provided in this embodiments of this specification, the target verification information is verification information that corresponds to the terminal device and the in-vehicle device and that is generated by the first server, and the certificate chain is a certificate chain including related information of the first server, the terminal device, and the in-vehicle device. Therefore, the terminal device and the in-vehicle device can separately perform identity verification on the local party and the other party (the in-vehicle device or the terminal device) by using the target verification information and the certificate chain; and when a verification result is that the verification succeeds, process the vehicle control instruction by using the target verification information, thereby improving security of the vehicle control instruction in a transmission process.

### Embodiment 13

This embodiment of this specification further provides a computer-readable storage medium. A computer program is stored in the computer-readable storage medium. When the computer program is executed by a processor, each process of the embodiment of the previous privacy-protection-based verification method is implemented, and the same technical effect can be achieved. To avoid repetition, details are omitted here for simplicity. The computer-readable storage medium is, for example, a read-only memory (ROM), a random access memory (RAM), a magnetic disk, or an optical disc.

According to the computer-readable storage medium provided in this embodiments of this specification, target verification information is verification information that corresponds to a terminal device and an in-vehicle device and that is generated by a first server, and the certificate chain is a certificate chain including related information of the first server, the terminal device, and the in-vehicle device. Therefore, the terminal device and the in-vehicle device can separately perform identity verification on the local party and the other party (the in-vehicle device or the terminal device) by using the target verification information and the certificate chain; and when a verification result is that the verification succeeds, process a vehicle control instruction by using the target verification information, thereby improving security of the vehicle control instruction in a transmission process.

Specific embodiments of this specification are described above. Other embodiments fall within the scope of the appended claims. In some cases, the actions or steps described in the claims can be performed in an order different from the order in the embodiments and the desired results can still be achieved. In addition, the process depicted in the accompanying drawings does not necessarily need the shown particular order to achieve the desired results. In some implementations, multi-tasking and parallel processing can or may be advantageous.

In the 1990s, the improvement on a technology can be clearly distinguished between hardware improvements (for example, improvements on circuit structures such as diodes, transistors and switches) or software improvements (improvements on method processes). However, as technologies develop, current improvements on many method processes can be considered as direct improvements on hardware circuit structures. Almost all designers program an improved method process into a hardware circuit, to obtain a corresponding hardware circuit structure. Therefore, a method process can be improved by using a hardware entity module. For example, a programmable logic device (PLD) (for example, a field programmable gate array (FPGA)) is such an integrated circuit, and a logical function of the PLD is determined by a user through device programming. A designer "integrates" a digital system to a single PLD through self-programming, without requiring a chip manufacturer to design and manufacture a dedicated integrated circuit chip. In addition, at present, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). At present, the Very-High-Speed Integrated Circuit Hardware Description Language (VHDL) and Verilog are most commonly used. A person skilled in the art should also understand that a hardware circuit that implements a logical method process can be readily obtained provided that the method process is logically programmed by using several of the previously described hardware description languages and is programmed into an integrated circuit.

A controller can be implemented in any appropriate way. For example, the controller can be in a form of a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or a built-in microcontroller. Examples of the controller include but are not limited to the following microcontrollers: ARC 625D, Atmel AT91SAM, Microchip PIC18F26K20, and Silicone Labs C8051F320. A memory controller can be further implemented as a part of control logic of a memory. A person skilled in the art also knows that, in addition to implementing the controller by using the computer-readable program code, method steps can be logically programmed to enable the controller to implement the same function in forms of a logic gate, a switch, an application-specific integrated circuit, a programmable logic controller, and a built-in microcontroller. Therefore, such a controller can be considered as a hardware component, and an apparatus that is included in the controller and that is configured to implement various functions can also be considered as a structure in the hardware component. Alternatively, the apparatus configured to implement various functions can even be considered as both a software module implementing a method and a structure in the hardware component.

Specifically, the system, apparatus, module, or unit illustrated in the previous embodiments can be implemented by using a computer chip or an entity, or can be implemented by using a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or any combination of these devices. For ease of description, the previous apparatus is divided to various units based on functions for separate description when the previous apparatus is described. Certainly, when the one or more embodiments of this specification are implemented, functions of the units can be implemented in one or more pieces of software and/or hardware.

A person skilled in the art should understand that the embodiments of this specification can be provided as a method, a system, or a computer program product. Therefore, the one or more embodiments of this specification can be in a form of hardware only embodiments, software only embodiments, or embodiments with a combination of software and hardware. In addition, the one or more embodiments of this specification can be in a form of a computer program product that is implemented on one or more computer-usable storage media (including but not limited to a magnetic disk memory, a CD-ROM, an optical memory, etc.) that include computer-usable program code.

The embodiments of this specification are described with reference to the flowcharts and/or block diagrams of the method, the device (system), and the computer program product according to the embodiments of this specification. It is worthwhile to note that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more processes in the flowcharts and/or in one or more blocks in the block diagrams. Alternatively, these computer program instructions can be stored in a computer-readable memory that can instruct the computer or the another programmable data processing device to work in a specific way, so that the instructions stored in the computer-readable memory generate an artifact that includes an instruction apparatus. The instruction apparatus implements a specified function in one or more processes in the flowcharts and/or in one or more blocks in the block diagrams. Alternatively, these computer program instructions can be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

In a typical configuration, a computing device includes one or more processors (CPUs), input/output interfaces, network interfaces, and memories. The memory may include a non-persistent memory, a random access memory (RAM), a nonvolatile memory, and/or another form in a computer-readable medium, for example, a read-only memory (ROM) or a flash memory (flash RAM). The memory is an example of the computer-readable medium. The computer-readable medium includes persistent, non-persistent, movable, and unmovable media that can store information by using any method or technology. The information can be a computer-readable instruction, a data structure, a program module, or other data. An example of the computer storage medium includes but is not limited to a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a tape and disk storage or another magnetic storage device, or any other non-transmission media that can be configured to store information that a computing device can access. As described in this specification, the computer-readable medium does not include computer-readable transitory media such as a modulated data signal and a carrier.

It is further worthwhile to note that the term "comprise" or "include" or any other variation thereof is intended to cover a non-exclusive inclusion, so that a process, method, commodity, or device that includes a series of elements includes those elements and further includes other elements not expressly listed or inherent to such a process, method, commodity, or device. Without more constraints, an element preceded by "includes a ..." does not preclude the existence of additional identical elements in a process, method, commodity, or device that includes the element.

A person skilled in the art should understand that the embodiments of this specification can be provided as a method, a system, or a computer program product. Therefore, the one or more embodiments of this specification can be in a form of hardware only embodiments, software only embodiments, or embodiments with a combination of software and hardware. In addition, the one or more embodiments of this specification can be in a form of a computer program product that is implemented on one or more computer-usable storage media (including but not limited to a magnetic disk memory, a CD-ROM, an optical memory, etc.) that include computer-usable program code.

The one or more embodiments of this specification can be described in the general context of a computer-executable instruction executed by a computer, for example, a program module. Generally, the program module includes a routine, a program, an object, a component, a data structure, etc. executing a specific task or implementing a specific abstract data type. The one or more embodiments of this specification can also be practiced in distributed computing environments. In the distributed computing environments, tasks are performed by remote processing devices connected through a communications network. In distributed computing environments, the program module can be located in local and remote computer storage media including storage devices.

The embodiments in this specification are described in a progressive way. For same or similar parts of the embodiments, references can be made to the embodiments mutually. Each embodiment focuses on a difference from other embodiments. Especially, a system embodiment is basically similar to a method embodiment, and therefore is described briefly. For a related part, references can be made to some descriptions in the method embodiment.

## Claims

1. A privacy-protection-based verification method, wherein the method is applied to a terminal device and comprises:
sending (S102) a local identity verification request for controlling an in-vehicle device to a first server, wherein the first server is configured to generate target verification information corresponding to the terminal device and the in-vehicle device for the identity verification request;
receiving (S104) the target verification information and a pre-constructed certificate chain that are sent by the first server, and verifying both the certificate chain and the target verification information based on a predetermined key of the terminal device to obtain a verification result, wherein the certificate chain is a multi-level certificate chain generated based on information of the first server, a predetermined key of the first server, device information of the terminal device, the predetermined key of the terminal device, device information of the in-vehicle device, and a predetermined key of the in-vehicle device; and
when the verification result is that the verification succeeds, processing (S106) a vehicle control instruction based on the target verification information, and sending a processed vehicle control instruction to the in-vehicle device, so that the in-vehicle device processes the vehicle control instruction based on the target verification information and the certificate chain.

2. The method according to claim 1, wherein before the receiving (S104) the target verification information and the pre-constructed certificate chain that are sent by the first server,
the method further comprises:
receiving server information of the first server and a first public key of the first server, wherein the first public key is a key that corresponds to the first server and that is generated by the first server based on a predetermined key generation algorithm;
generating a second private key and a second public key that correspond to the terminal device based on the predetermined key generation algorithm;
signing the device information of the terminal device based on the second private key to obtain first signature information;
generating a root certificate based on the second public key, the device information of the terminal device, and the first signature information;
signing the server information based on the second private key to obtain second signature information;
generating a second certificate based on the first public key, the server information, and the second signature information; and
sending a first certificate chain comprising the root certificate and the second certificate to the first server, so that the first server constructs the certificate chain based on the first certificate chain, the device information of the in-vehicle device, and the predetermined key of the in-vehicle device.

3. The method according to claim 2, wherein before the receiving (S104) the target verification information and the pre-constructed certificate chain that are sent by the first server,
the method further comprises:
generating a fourth public key corresponding to a user based on the predetermined key generation algorithm; and
sending the fourth public key and the device information of the terminal device to the first server, so that the first server generates the target verification information based on the device information of the terminal device, the fourth public key, the predetermined key of the in-vehicle device, and the device information of the in-vehicle device.

4. The method according to claim 3, wherein the verifying both the certificate chain and the target verification information based on a predetermined key of the terminal device to obtain a verification result comprises:
receiving first verifiable information sent by the first server, wherein the first verifiable information is information that corresponds to the target verification information and that is obtained by the first server by signing the target verification information based on a first private key of the first server;
verifying the root certificate and the second certificate in the certificate chain based on the first public key of the first server and the second public key of the terminal device to obtain a first verification result;
verifying the first verifiable information based on the first public key of the first server and the target verification information to obtain a second verification result; and
determining the verification result based on the first verification result and the second verification result.

5. The method according to claim 3, wherein the generating a fourth public key corresponding to a user based on the predetermined key generation algorithm comprises:
sending an identity verification request for the user to a second server;
receiving a target token generated by the second server based on the identity verification request; and
performing identify verification on the user based on the target token, and generating the fourth public key corresponding to the user based on the predetermined key generation algorithm when an identity verification result is that the verification succeeds.

6. A privacy-protection-based verification method, wherein the method is applied to an in-vehicle device and comprises:
receiving (S302) target verification information corresponding to a terminal device and the in-vehicle device and a pre-constructed certificate chain that are sent by a first server, wherein the certificate chain is a multi-level certificate chain generated based on information of the first server, a predetermined key of the first server, device information of the terminal device, a predetermined key of the terminal device, device information of the in-vehicle device, and a predetermined key of the in-vehicle device;
verifying (S304) both the certificate chain and the target verification information based on the predetermined key of the in-vehicle device to obtain a verification result; and
when the verification result is that the verification succeeds, processing (S306), based on the target verification information, a processed vehicle control instruction sent by the terminal device, to obtain a vehicle control instruction, and executing the vehicle control instruction, wherein the processed vehicle control instruction is an instruction obtained by the terminal device by processing the vehicle control instruction based on the target verification information.

7. The method according to claim 6, wherein before the verifying (S304) both the certificate chain and the target verification information based on the predetermined key of the in-vehicle device, the method further comprises:
generating a third public key corresponding to the in-vehicle device based on a predetermined key generation algorithm; and
sending the third public key and the device information of the in-vehicle device to the first server, so that the first server generates the certificate chain based on the third public key, the device information of the in-vehicle device, the information of the first server, the predetermined key of the first server, the device information of the terminal device, and the predetermined key of the terminal device.

8. The method according to claim 7, wherein the verifying (S304) both the certificate chain and the target verification information based on the predetermined key of the in-vehicle device to obtain a verification result comprises:
verifying the certificate chain based on the third public key of the in-vehicle device to obtain a third verification result;
receiving a first public key and first verifiable information that are sent by the first server, wherein the first verifiable information is information that corresponds to the target verification information and that is obtained by the first server by signing the target verification information based on a first private key of the first server, and the first public key and the first private key are keys that correspond to the first server and that are generated by the first server based on the predetermined key generation algorithm;
verifying the first verifiable information based on the first public key of the first server and the target verification information to obtain a fourth verification result; and
determining the verification result based on the third verification result and the fourth verification result.

9. The method according to claim 7, wherein the processing (S306), based on the target verification information, a processed vehicle control instruction sent by the terminal device, to obtain a vehicle control instruction, and executing the vehicle control instruction comprises:
receiving a fourth public key sent by the terminal device, wherein the fourth public key is a key that corresponds to a user of the terminal device and that is generated by the terminal device based on the predetermined key generation algorithm;
processing, based on a third private key of the in-vehicle device, the processed vehicle control instruction sent by the terminal device, to obtain the vehicle control instruction and second verifiable information, wherein the processed vehicle control instruction is obtained by the terminal device by encrypting the vehicle control instruction based on the third public key of the in-vehicle device, the third private key is a private key that corresponds to the third public key and that is generated by the in-vehicle device based on the predetermined key generation algorithm, the second verifiable information is information obtained by the terminal device by encrypting the vehicle control instruction based on a fourth private key of the user, and the fourth private key is a private key that corresponds to the fourth public key and that is generated by the terminal device based on the predetermined key generation algorithm; and
verifying the second verifiable information based on the vehicle control instruction and the fourth public key of the user, and executing the vehicle control instruction when the verification succeeds.

10. A privacy-protection-based verification method, wherein the method is applied to a first server and comprises:
generating (S502) target verification information corresponding to a terminal device and an in-vehicle device when receiving a local identity verification request sent by the terminal device for controlling the in-vehicle device;
and
sending (S504) the target verification information and a pre-constructed certificate chain to the terminal device and the in-vehicle device, so that the terminal device processes a vehicle control instruction based on the target verification information after succeeding in verifying both the certificate chain and the target verification information based on a predetermined key of the terminal device, so that the in-vehicle device processes, based on the target verification information, a processed vehicle control instruction sent by the terminal device after succeeding in verifying both the certificate chain and the target verification information based on a predetermined key of the in-vehicle device, wherein the certificate chain is a multi-level certificate chain generated based on information of the first server, a predetermined key of the first server, device information of the terminal device, the predetermined key of the terminal device, device information of the in-vehicle device, and the predetermined key of the in-vehicle device.

11. The method according to claim 10, wherein before the sending (S504) the target verification information and a pre-constructed certificate chain to the terminal device and the in-vehicle device, the method further comprises:
generating a first private key and a first public key that correspond to the first server based on a predetermined key generation algorithm;
sending the first public key and the server information to the terminal device;
receiving a first certificate chain that comprises a root certificate and a second certificate and that is sent by the terminal device, wherein the root certificate is determined by the terminal device based on a second public key, the device information of the terminal device, and first signature information, the first signature information is obtained by the terminal device by signing the device information of the terminal device based on a second private key, the second public key and the second private key are keys that correspond to the terminal device and that are generated by the terminal device based on the predetermined key generation algorithm, the second certificate is determined by the terminal device based on the first public key, the server information, and second signature information, and the second signature information is obtained by the terminal device by signing the server information based on the second private key;
receiving a third public key and the device information of the in-vehicle device that are sent by the in-vehicle device, wherein the third public key is a key that corresponds to the in-vehicle device and that is generated by the in-vehicle device based on the predetermined key generation algorithm;
signing the device information of the in-vehicle device based on the first private key to obtain third signature information;
determining the third public key, the device information of the in-vehicle device, and the third signature information as a third certificate; and
storing the certificate chain comprising the third certificate and the first certificate chain.

12. A privacy-protection-based verification system, comprising a terminal device, an in-vehicle device, and a first server, wherein
the terminal device is configured to send a local identity verification request for controlling the in-vehicle device to the first server;
the first server is configured to generate target verification information corresponding to the terminal device and the in-vehicle device, and send the target verification information and a pre-constructed certificate chain to the terminal device and the in-vehicle device, wherein the certificate chain is a multi-level certificate chain generated based on information of the first server, a predetermined key of the first server, device information of the terminal device, a predetermined key of the terminal device, device information of the in-vehicle device, and a predetermined key of the in-vehicle device;
the terminal device is configured to verify both the certificate chain and the target verification information based on the predetermined key of the terminal device to obtain a first verification result; and when the first verification result is that the verification succeeds, process a vehicle control instruction based on the target verification information, and send a processed vehicle control instruction to the in-vehicle device; and
the in-vehicle device is configured to verify both the certificate chain and the target verification information based on the predetermined key of the in-vehicle device to obtain a second verification result; and when the second verification result is that the verification succeeds, process the received processed vehicle control instruction based on the target verification information to obtain the vehicle control instruction, and execute the vehicle control instruction.

13. A privacy-protection-based verification device, wherein the privacy-protection-based verification device comprises a processor and a memory arranged to store computer-executable instructions, and when the executable instructions are executed, the processor is caused to:
send a local identity verification request for controlling an in-vehicle device to a first server, wherein the first server is configured to generate target verification information corresponding to the privacy-protection-based verification device and the in-vehicle device for the identity verification request;
receive the target verification information and a pre-constructed certificate chain that are sent by the first server, and verify both the certificate chain and the target verification information based on a predetermined key of the privacy-protection-based verification device to obtain a verification result, wherein the certificate chain is a multi-level certificate chain generated based on information of the first server, a predetermined key of the first server, device information of the privacy-protection-based verification device, the predetermined key of the privacy-protection-based verification device, device information of the in-vehicle device, and a predetermined key of the in-vehicle device; and
when the verification result is that the verification succeeds, process (S106) a vehicle control instruction based on the target verification information, and send a processed vehicle control instruction to the in-vehicle device, so that the in-vehicle device processes the vehicle control instruction based on the target verification information and the certificate chain.

14. A privacy-protection-based verification device, wherein the privacy-protection-based verification device comprises a processor and a memory arranged to store computer-executable instructions, and when the executable instructions are executed, the processor is caused to:
receive target verification information corresponding to a terminal device and the privacy-protection-based verification device and a pre-constructed certificate chain that are sent by a first server, wherein the certificate chain is a multi-level certificate chain generated based on information of the first server, a predetermined key of the first server, device information of the terminal device, a predetermined key of the terminal device, device information of the privacy-protection-based verification device, and a predetermined key of the privacy-protection-based verification device;
verify both the certificate chain and the target verification information based on the predetermined key of the privacy-protection-based verification device; and
after the verification succeeds, process, based on the target verification information, a processed vehicle control instruction sent by the terminal device, to obtain a vehicle control instruction, and execute the vehicle control instruction, wherein the processed vehicle control instruction is an instruction obtained by the terminal device by processing the vehicle control instruction based on the target verification information.

15. A privacy-protection-based verification device, wherein the privacy-protection-based verification device comprises a processor and a memory arranged to store computer-executable instructions, and when the executable instructions are executed, the processor is caused to:
generate target verification information corresponding to a terminal device and an in-vehicle device when receiving a local identity verification request sent by the terminal device for controlling the in-vehicle device;
and
send the target verification information and a pre-constructed certificate chain to the terminal device and the in-vehicle device, so that the terminal device processes a vehicle control instruction based on the target verification information after succeeding in verifying both the certificate chain and the target verification information based on a predetermined key of the terminal device, so that the in-vehicle device processes, based on the target verification information, a processed vehicle control instruction sent by the terminal device after succeeding in verifying both the certificate chain and the target verification information based on a predetermined key of the in-vehicle device, wherein the certificate chain is a multi-level certificate chain generated based on information of the privacy-protection-based verification device, a predetermined key of the privacy-protection-based verification device, device information of the terminal device, the predetermined key of the terminal device, device information of the in-vehicle device, and the predetermined key of the in-vehicle device.

## Patentansprüche

1. Datenschutzbasiertes Verifizierungsverfahren, wobei das Verfahren auf ein Endgerät angewendet wird und Folgendes umfasst:
Senden (S102) einer lokalen Identitätsverifizierungsanforderung zur Steuerung eines fahrzeuginternen Geräts an einen ersten Server, wobei der erste Server so konfiguriert ist, dass er Zielverifizierungsinformationen entsprechend dem Endgerät und dem fahrzeuginternen Gerät für die Identitätsverifizierungsanforderung erzeugt;
Empfangen (S104) der Zielverifizierungsinformationen und einer vorab erstellten Zertifikatskette, die vom ersten Server gesendet werden, und Verifizieren sowohl der Zertifikatskette als auch der Zielverifizierungsinformationen basierend auf einem vorbestimmten Schlüssel des Endgeräts, um ein Verifizierungsergebnis zu erhalten, wobei die Zertifikatskette eine mehrstufige Zertifikatskette ist, die basierend auf Informationen des ersten Servers, einem vorbestimmten Schlüssel des ersten Servers, Geräteinformationen des Endgeräts, dem vorbestimmten Schlüssel des Endgeräts, Geräteinformationen des fahrzeuginternen Geräts und einem vorbestimmten Schlüssel des fahrzeuginternen Geräts erzeugt wird; und
wenn das Verifizierungsergebnis lautet, dass die Verifizierung erfolgreich ist, Verarbeiten (S106) einer Fahrzeugsteuerungsanweisung basierend auf den Zielverifizierungsinformationen und Senden einer verarbeiteten Fahrzeugsteuerungsanweisung an das fahrzeuginterne Gerät, so dass das fahrzeuginterne Gerät die Fahrzeugsteuerungsanweisung basierend auf den Zielverifizierungsinformationen und der Zertifikatskette verarbeitet.

2. Verfahren nach Anspruch 1, wobei vor dem Empfangen (S104) der Zielverifizierungsinformationen und der vorab erstellten Zertifikatskette, die vom ersten Server gesendet werden, das Verfahren ferner Folgendes umfasst:
Empfangen von Serverinformationen des ersten Servers und eines ersten öffentlichen Schlüssels des ersten Servers, wobei der erste öffentliche Schlüssel ein Schlüssel ist, der dem ersten Server entspricht und der vom ersten Server basierend auf einem vorbestimmten Schlüsselgenerierungsalgorithmus generiert wird;
Erzeugen eines zweiten privaten Schlüssels und eines zweiten öffentlichen Schlüssels, die dem Endgerät entsprechen, basierend auf dem vorbestimmten Schlüsselgenerierungsalgorithmus;
Signieren der Geräteinformationen des Endgeräts basierend auf dem zweiten privaten Schlüssel, um erste Signaturinformationen zu erhalten;
Erzeugen eines Stammzertifikats basierend auf dem zweiten öffentlichen Schlüssel, den Geräteinformationen des Endgeräts und den ersten Signaturinformationen;
Signieren der Serverinformationen basierend auf dem zweiten privaten Schlüssel, um zweite Signaturinformationen zu erhalten;
Erzeugen eines zweiten Zertifikats basierend auf dem ersten öffentlichen Schlüssel, den Serverinformationen und den zweiten Signaturinformationen; und
Senden einer ersten Zertifikatskette, die das Stammzertifikat und das zweite Zertifikat aufweist, an den ersten Server, so dass der erste Server die Zertifikatskette basierend auf der ersten Zertifikatskette, den Geräteinformationen des fahrzeuginternen Geräts und dem vorbestimmten Schlüssel des fahrzeuginternen Geräts erstellt.

3. Verfahren nach Anspruch 2, wobei vor dem Empfangen (S104) der Zielverifizierungsinformationen und der vorab erstellten Zertifikatskette, die vom ersten Server gesendet werden, das Verfahren ferner Folgendes umfasst:
Erzeugen eines vierten öffentlichen Schlüssels, der einem Benutzer entspricht, basierend auf dem vorbestimmten Schlüsselgenerierungsalgorithmus; und
Senden des vierten öffentlichen Schlüssels und der Geräteinformationen des Endgeräts an den ersten Server, so dass der erste Server die Zielverifizierungsinformationen basierend auf den Geräteinformationen des Endgeräts, dem vierten öffentlichen Schlüssel, dem vorbestimmten Schlüssel des fahrzeuginternen Geräts und den Geräteinformationen des fahrzeuginternen Geräts erzeugt.

4. Verfahren nach Anspruch 3, wobei das Verifizieren sowohl der Zertifikatskette als auch der Zielverifizierungsinformationen basierend auf dem vorbestimmten Schlüssel des Endgeräts, um ein Verifizierungsergebnis zu erhalten, Folgendes umfasst:
Empfangen erster verifizierbarer Informationen, die vom ersten Server gesendet werden, wobei die ersten verifizierbaren Informationen Informationen sind, die den Zielverifizierungsinformationen entsprechen und die vom ersten Server durch Signieren der Zielverifizierungsinformationen basierend auf einem ersten privaten Schlüssel des ersten Servers erhalten werden;
Verifizieren des Stammzertifikats und des zweiten Zertifikats in der Zertifikatskette basierend auf dem ersten öffentlichen Schlüssel des ersten Servers und dem zweiten öffentlichen Schlüssel des Endgeräts, um ein erstes Verifizierungsergebnis zu erhalten;
Verifizieren der ersten verifizierbaren Informationen basierend auf dem ersten öffentlichen Schlüssel des ersten Servers und den Zielverifizierungsinformationen, um ein zweites Verifizierungsergebnis zu erhalten; und
Bestimmen des Verifizierungsergebnisses basierend auf dem ersten Verifizierungsergebnis und dem zweiten Verifizierungsergebnis.

5. Verfahren nach Anspruch 3, wobei das Erzeugen eines vierten öffentlichen Schlüssels, der einem Benutzer entspricht, basierend auf dem vorbestimmten Schlüsselgenerierungsalgorithmus Folgendes umfasst:
Senden einer Identitätsverifizierungsanforderung für den Benutzer an einen zweiten Server;
Empfangen eines vom zweiten Server basierend auf der Identitätsverifizierungsanforderung erzeugten Zieltokens; und
Durchführen einer Identitätsverifizierung des Benutzers basierend auf dem Zieltoken und Erzeugen des dem Benutzer entsprechenden vierten öffentlichen Schlüssels basierend auf dem vorbestimmten Schlüsselgenerierungsalgorithmus, wenn ein Identitätsverifizierungsergebnis lautet, dass die Verifizierung erfolgreich ist.

6. Datenschutzbasiertes Verifizierungsverfahren, wobei das Verfahren auf ein fahrzeuginternes Gerät angewendet wird und Folgendes umfasst:
Empfangen (S302) von Zielverifizierungsinformationen, die einem Endgerät und dem fahrzeuginterne Gerät entsprechen, und einer vorab erstellten Zertifikatskette, die von einem ersten Server gesendet werden, wobei die Zertifikatskette eine mehrstufige Zertifikatskette ist, die basierend auf Informationen des ersten Servers, einem vorbestimmten Schlüssel des ersten Servers, Geräteinformationen des Endgeräts, einem vorbestimmten Schlüssel des Endgeräts, Geräteinformationen des fahrzeuginternen Geräts und einem vorbestimmten Schlüssel des fahrzeuginternen Geräts erzeugt wird;
Verifizieren (S304) sowohl der Zertifikatskette als auch der Zielverifizierungsinformationen basierend auf dem vorbestimmten Schlüssel des fahrzeuginternen Geräts, um ein Verifizierungsergebnis zu erhalten; und
wenn das Verifizierungsergebnis lautet, dass die Verifizierung erfolgreich ist, Verarbeiten (S306) einer verarbeiteten Fahrzeugsteuerungsanweisung, die vom Endgerät gesendet wird, basierend auf den Zielverifizierungsinformationen, um eine Fahrzeugsteuerungsanweisung zu erhalten, und Ausführen der Fahrzeugsteuerungsanweisung, wobei die verarbeitete Fahrzeugsteuerungsanweisung eine Anweisung ist, die vom Endgerät durch Verarbeiten der Fahrzeugsteuerungsanweisung basierend auf den Zielverifizierungsinformationen erhalten wird.

7. Verfahren nach Anspruch 6, wobei vor der Verifizierung (S304) sowohl der Zertifikatskette als auch der Zielverifizierungsinformationen basierend auf dem vorbestimmten Schlüssel des fahrzeuginternen Geräts das Verfahren ferner Folgendes umfasst:
Erzeugen eines dritten öffentlichen Schlüssels, der dem fahrzeuginternen Gerät entspricht, basierend auf einem vorbestimmten Schlüsselgenerierungsalgorithmus; und
Senden des dritten öffentlichen Schlüssels und der Geräteinformationen des fahrzeuginternen Geräts an den ersten Server, so dass der erste Server die Zertifikatskette basierend auf dem dritten öffentlichen Schlüssel, den Geräteinformationen des fahrzeuginternen Geräts, den Informationen des ersten Servers, dem vorbestimmten Schlüssel des ersten Servers, den Geräteinformationen des Endgeräts und dem vorbestimmten Schlüssel des Endgeräts erzeugt.

8. Verfahren nach Anspruch 7, wobei das Verifizieren (S304) sowohl der Zertifikatskette als auch der Zielverifizierungsinformationen basierend auf dem vorbestimmten Schlüssel des fahrzeuginternen Geräts, um ein Verifizierungsergebnis zu erhalten, Folgendes umfasst:
Verifizieren der Zertifikatskette basierend auf dem dritten öffentlichen Schlüssel des fahrzeuginternen Geräts, um ein drittes Verifizierungsergebnis zu erhalten;
Empfangen eines ersten öffentlichen Schlüssels und erster verifizierbarer Informationen, die vom ersten Server gesendet werden, wobei die ersten verifizierbaren Informationen Informationen sind, die den Zielverifizierungsinformationen entsprechen und die vom ersten Server durch Signieren der Zielverifizierungsinformationen basierend auf einem ersten privaten Schlüssel des ersten Servers erhalten werden, und wobei der erste öffentliche Schlüssel und der erste private Schlüssel Schlüssel sind, die dem ersten Server entsprechen und die vom ersten Server basierend auf dem vorbestimmten Schlüsselgenerierungsalgorithmus erzeugt werden;
Verifizieren der ersten verifizierbaren Informationen basierend auf dem ersten öffentlichen Schlüssel des ersten Servers und den Zielverifizierungsinformationen, um ein viertes Verifizierungsergebnis zu erhalten; und
Bestimmen des Verifizierungsergebnisses basierend auf dem dritten Verifizierungsergebnis und dem vierten Verifizierungsergebnis.

9. Verfahren nach Anspruch 7, wobei das Verarbeiten (S306) einer verarbeiteten Fahrzeugsteuerungsanweisung, die vom Endgerät gesendet wird, basierend auf den Zielverifizierungsinformationen, um eine Fahrzeugsteuerungsanweisung zu erhalten, und Ausführen der Fahrzeugsteuerungsanweisung, Folgendes umfasst:
Empfangen eines vom Endgerät gesendeten vierten öffentlichen Schlüssels, wobei der vierte öffentliche Schlüssel ein Schlüssel ist, der einem Benutzer des Endgeräts entspricht und vom Endgerät basierend auf dem vorbestimmten Schlüsselgenerierungsalgorithmus erzeugt wird;
Verarbeiten der vom Endgerät gesendeten verarbeiteten Fahrzeugsteuerungsanweisung basierend auf einem dritten privaten Schlüssel des fahrzeuginternen Gerätes, um die Fahrzeugsteuerungsanweisung und zweite verifizierbare Informationen zu erhalten, wobei die verarbeitete Fahrzeugsteuerungsanweisung vom Endgerät durch Verschlüsseln der Fahrzeugsteuerungsanweisung basierend auf dem dritten öffentlichen Schlüssel des fahrzeuginternen Gerätes erhalten wird, der dritte private Schlüssel ein privater Schlüssel ist, der dem dritten öffentlichen Schlüssel entspricht und vom fahrzeuginternen Geräte basierend auf dem vorbestimmten Schlüsselgenerierungsalgorithmus erzeugt wird, die zweiten verifizierbaren Informationen Informationen sind, die vom Endgerät durch Verschlüsseln der Fahrzeugsteuerungsanweisung basierend auf einem vierten privaten Schlüssel des Benutzers erhalten wird, und der vierte private Schlüssel ein privater Schlüssel ist, der dem vierten öffentlichen Schlüssel entspricht und vom Endgerät basierend auf dem vorbestimmten Schlüsselgenerierungsalgorithmus erzeugt wird; und
Verifizieren der zweiten verifizierbaren Informationen basierend auf der Fahrzeugsteuerungsanweisung und dem vierten öffentlichen Schlüssel des Benutzers und Ausführen der Fahrzeugsteuerungsanweisung, wenn die Verifizierung erfolgreich ist.

10. Datenschutzbasiertes Verifizierungsverfahren, wobei das Verfahren auf einen ersten Server angewendet wird und Folgendes umfasst:
Erzeugen (S502) von Zielverifizierungsinformationen, die einem Endgerät und einem fahrzeuginternen Gerät entsprechen, wenn eine lokale Identitätsverifizierungsanforderung empfangen wird, die vom Endgerät zum Steuern des fahrzeuginternen Geräts gesendet wird; und
Senden (S504) der Zielverifizierungsinformationen und einer vorab erstellten Zertifikatskette an das Endgerät und das fahrzeuginterne Gerät, so dass das Endgerät eine Fahrzeugsteuerungsanweisung basierend auf den Zielverifizierungsinformationen verarbeitet, nachdem es sowohl die Zertifikatskette als auch die Zielverifizierungsinformationen basierend auf einem vorbestimmten Schlüssel des Endgeräts erfolgreich verifiziert hat, so dass das fahrzeuginterne Gerät basierend auf den Zielverifizierungsinformationen eine verarbeitete Fahrzeugsteuerungsanweisung verarbeitet, die vom Endgerät gesendet wird, nachdem es sowohl die Zertifikatskette als auch die Zielverifizierungsinformationen basierend auf einem vorbestimmten Schlüssel des fahrzeuginternen Geräts erfolgreich verifiziert hat, wobei die Zertifikatskette eine mehrstufige Zertifikatskette ist, die basierend auf Informationen des ersten Servers, einem vorbestimmten Schlüssel des ersten Servers, Geräteinformationen des Endgeräts, dem vorbestimmten Schlüssel des Endgeräts, Geräteinformationen des fahrzeuginternen Geräts und dem vorbestimmten Schlüssel des fahrzeuginternen Geräts erzeugt wird.

11. Verfahren nach Anspruch 10, wobei vor dem Senden (S504) der Zielverifizierungsinformationen und einer vorab erstellten Zertifikatskette an das Endgerät und das fahrzeuginterne Gerät das Verfahren ferner Folgendes umfasst:
Erzeugen eines ersten privaten Schlüssels und eines ersten öffentlichen Schlüssels, die dem ersten Server entsprechen, basierend auf einem vorbestimmten Schlüsselgenerierungsalgorithmus;
Senden des ersten öffentlichen Schlüssels und der Serverinformationen an das Endgerät;
Empfangen einer ersten Zertifikatskette, die ein Stammzertifikat und ein zweites Zertifikat aufweist und vom Endgerät gesendet wird, wobei das Stammzertifikat vom Endgerät basierend auf einem zweiten öffentlichen Schlüssel, den Geräteinformationen des Endgeräts und ersten Signaturinformationen bestimmt wird, wobei die ersten Signaturinformationen vom Endgerät durch Signieren der Geräteinformationen des Endgeräts basierend auf einem zweiten privaten Schlüssel erhalten werden, der zweite öffentliche Schlüssel und der zweite private Schlüssel Schlüssel sind, die dem Endgerät entsprechen und vom Endgerät basierend auf dem vorbestimmten Schlüsselgenerierungsalgorithmus erzeugt werden, das zweite Zertifikat vom Endgerät basierend auf dem ersten öffentlichen Schlüssel, den Serverinformationen und den zweiten Signaturinformationen bestimmt wird, und die zweiten Signaturinformationen vom Endgerät durch Signieren der Serverinformationen basierend auf dem zweiten privaten Schlüssel erhalten werden;
Empfangen eines dritten öffentlichen Schlüssels und der Geräteinformationen des fahrzeuginternen Geräts, die vom fahrzeuginternen Gerät gesendet werden, wobei der dritte öffentliche Schlüssel ein Schlüssel ist, der dem fahrzeuginternen Gerät entspricht und vom fahrzeuginternen Gerät basierend auf dem vorbestimmten Schlüsselgenerierungsalgorithmus erzeugt wird;
Signieren der Geräteinformationen des fahrzeuginternen Geräts basierend auf dem ersten privaten Schlüssel, um dritte Signaturinformationen zu erhalten;
Bestimmen des dritten öffentlichen Schlüssels, der Geräteinformationen des fahrzeuginternen Geräts und der dritten Signaturinformationen als drittes Zertifikat; und
Speichern der Zertifikatskette, die das dritte Zertifikat und die erste Zertifikatskette aufweist.

12. Datenschutzbasiertes Verifizierungssystem, das ein Endgerät, ein fahrzeuginternes Gerät und einen ersten Server aufweist, wobei
das Endgerät so konfiguriert ist, dass es eine lokale Identitätsverifizierungsanforderung zur Steuerung des fahrzeuginternen Geräts an den ersten Server sendet;
der erste Server so konfiguriert ist, dass er Zielverifizierungsinformationen entsprechend dem Endgerät und dem fahrzeuginternen Gerät erzeugt und die Zielverifizierungsinformationen und eine vorab erstellte Zertifikatskette an das Endgerät und das fahrzeuginterne Gerät sendet, wobei die Zertifikatskette eine mehrstufige Zertifikatskette ist, die basierend auf Informationen des ersten Servers, einem vorbestimmten Schlüssel des ersten Servers, Geräteinformationen des Endgeräts, einem vorbestimmten Schlüssel des Endgeräts, Geräteinformationen des fahrzeuginternen Geräts und einem vorbestimmten Schlüssel des fahrzeuginternen Geräts erzeugt wird;
das Endgerät so konfiguriert ist, dass es sowohl die Zertifikatskette als auch die Zielverifizierungsinformationen basierend auf dem vorbestimmten Schlüssel des Endgeräts verifiziert, um ein erstes Verifizierungsergebnis zu erhalten; und wenn das erste Verifizierungsergebnis lautet, dass die Verifizierung erfolgreich ist, es eine Fahrzeugsteuerungsanweisung basierend auf den Zielverifizierungsinformationen verarbeitet und eine verarbeitete Fahrzeugsteuerungsanweisung an das fahrzeuginterne Gerät sendet; und
das fahrzeuginterne Gerät so konfiguriert ist, dass es sowohl die Zertifikatskette als auch die Zielverifizierungsinformationen basierend auf dem vorbestimmten Schlüssel des fahrzeuginternen Geräts verifiziert, um ein zweites Verifizierungsergebnis zu erhalten; und wenn das zweite Verifizierungsergebnis lautet, dass die Verifizierung erfolgreich ist, es die empfangene verarbeitete Fahrzeugsteuerungsanweisung basierend auf den Zielverifizierungsinformationen verarbeitet, um die Fahrzeugsteuerungsanweisung zu erhalten, und die Fahrzeugsteuerungsanweisung ausführt.

13. Datenschutzbasiertes Verifizierungsgerät, wobei das datenschutzbasierte Verifizierungsgerät einen Prozessor und einen Speicher aufweist, der zum Speichern von computerausführbaren Befehlen vorgesehen ist, und wenn die ausführbaren Befehle ausgeführt werden, der Prozessor veranlasst wird:
eine lokale Identitätsverifizierungsanforderung zum Steuern eines fahrzeuginternen Geräts an einen ersten Server zu senden, wobei der erste Server so konfiguriert ist, dass er Zielverifizierungsinformationen entsprechend dem datenschutzbasierten Verifizierungsgerät und dem fahrzeuginternen Gerät für die Identitätsverifizierungsanforderung erzeugt;
die Zielverifizierungsinformationen und eine vorab erstellten Zertifikatskette zu empfangen, die vom ersten Server gesendet werden, und sowohl die Zertifikatskette als auch die Zielverifizierungsinformationen basierend auf einem vorbestimmten Schlüssel des datenschutzbasierten Verifizierungsgeräts zu verifizieren, um ein Verifizierungsergebnis zu erhalten, wobei die Zertifikatskette eine mehrstufige Zertifikatskette ist, die basierend auf Informationen des ersten Servers, einem vorbestimmten Schlüssels des ersten Servers, Geräteinformationen des datenschutzbasierten Verifizierungsgeräts, dem vorbestimmten Schlüssel des datenschutzbasierten Verifizierungsgeräts, Geräteinformationen des fahrzeuginternen Geräts und einem vorbestimmten Schlüssel des fahrzeuginternen Geräts erzeugt wird; und
wenn das Verifizierungsergebnis lautet, dass die Verifizierung erfolgreich ist, eine Fahrzeugsteuerungsanweisung basierend auf den Zielverifizierungsinformationen zu verarbeiten (S106) und eine verarbeitete Fahrzeugsteuerungsanweisung an das fahrzeuginterne Gerät zu senden, so dass das fahrzeuginterne Gerät die Fahrzeugsteuerungsanweisung basierend auf den Zielverifizierungsinformationen und der Zertifikatskette verarbeitet.

14. Datenschutzbasiertes Verifizierungsgerät, wobei das datenschutzbasierte Verifizierungsgerät einen Prozessor und einen Speicher aufweist, der zum Speichern von computerausführbaren Befehlen vorgesehen ist, und wenn die ausführbaren Befehle ausgeführt werden, der Prozessor veranlasst wird:
Zielverifizierungsinformationen entsprechend einem Endgerät und dem datenschutzbasierten Verifizierungsgerät und eine vorab erstellte Zertifikatskette zu empfangen, die von einem ersten Server gesendet werden, wobei die Zertifikatskette eine mehrstufige Zertifikatskette ist, die basierend auf Informationen des ersten Servers, einem vorbestimmten Schlüssel des ersten Servers, Geräteinformationen des Endgeräts, einem vorbestimmten Schlüssel des Endgeräts, Geräteinformationen des datenschutzbasierten Verifizierungsgeräts und einem vorbestimmten Schlüssel des datenschutzbasierten Verifizierungsgeräts erzeugt wird;
sowohl die Zertifikatskette als auch die Zielverifizierungsinformationen basierend auf dem vorbestimmten Schlüssel des datenschutzbasierten Verifizierungsgeräts zu verifizieren; und
nach erfolgreicher Verifizierung basierend auf den Zielverifizierungsinformationen eine vom Endgerät gesendete verarbeitete Fahrzeugsteuerungsanweisung zu verarbeiten, um eine Fahrzeugsteuerungsanweisung zu erhalten, und die Fahrzeugsteuerungsanweisung auszuführen, wobei die verarbeitete Fahrzeugsteuerungsanweisung eine Anweisung ist, die vom Endgerät durch Verarbeiten der Fahrzeugsteuerungsanweisung basierend auf den Zielverifizierungsinformationen erhalten wird.

15. Datenschutzbasiertes Verifizierungsgerät, wobei das datenschutzbasierte Verifizierungsgerät einen Prozessor und einen Speicher aufweist, der zum Speichern von computerausführbaren Befehlen vorgesehen ist, und wenn die ausführbaren Befehle ausgeführt werden, der Prozessor veranlasst wird:
bei Empfang einer lokalen Identitätsverifizierungsanforderung, die von dem Endgerät zum Steuern des fahrzeuginternen Geräts gesendet wird, Zielinfizierungsinformationen zu erzeugen, die einem Endgerät und einem fahrzeuginternen Gerät entsprechen; und
die Zielinfizierungsinformationen und eine vorab erstellte Zertifikatskette an das Endgerät und das fahrzeuginterne Gerät zu senden, so dass das Endgerät eine Fahrzeugsteuerungsanweisung basierend auf den Zielverifizierungsinformationen verarbeitet, nachdem es die Zertifikatskette und die Zielverifizierungsinformationen basierend auf einem vorbestimmten Schlüssel des Endgeräts erfolgreich verifiziert hat, so dass das fahrzeuginterne Gerät basierend auf den Zielverifizierungsinformationen eine vom Endgerät gesendete verarbeitete Fahrzeugsteuerungsanweisung verarbeitet, nachdem es sowohl die Zertifikatskette als auch die Zielverifizierungsinformationen basierend auf einem vorbestimmten Schlüssel des fahrzeuginternen Geräts erfolgreich verifiziert hat, wobei die Zertifikatskette eine mehrstufige Zertifikatskette ist, die basierend auf Informationen des datenschutzbasierten Verifizierungsgeräts, einem vorbestimmten Schlüssel des datenschutzbasierten Verifizierungsgeräts, Geräteinformationen des Endgeräts, dem vorbestimmten Schlüssel des Endgeräts, Geräteinformationen des fahrzeuginternen Geräts und dem vorbestimmten Schlüssel des fahrzeuginternen Geräts erzeugt wird.

## Revendications

1. Procédé de vérification sur la base de la protection de la vie privée, dans lequel le procédé est appliqué à un dispositif terminal et comprend :
l'envoi (S102) d'une demande de vérification d'identité locale pour la commande d'un dispositif embarqué à un premier serveur, dans lequel
le premier serveur est configuré pour générer des informations de vérification de cible correspondant au dispositif terminal et au dispositif embarqué pour la demande de vérification d'identité ;
la réception (S104) des informations de vérification de cible et d'une chaîne de certificats pré-construite envoyées par le premier serveur, et la vérification de la chaîne de certificats et des informations de vérification de cible sur la base d'une clé prédéterminée du dispositif terminal afin d'obtenir un résultat de vérification, dans lequel la chaîne de certificats est une chaîne de certificats à plusieurs niveaux générée sur la base d'informations du premier serveur, d'une clé prédéterminée du premier serveur, d'informations de dispositif du dispositif terminal, de la clé prédéterminée du dispositif terminal, d'informations de dispositif du dispositif embarqué et d'une clé prédéterminée du dispositif embarqué ; et
lorsque le résultat de vérification est que la vérification est réussie, le traitement (S106) d'une instruction de commande de véhicule sur la base des informations de vérification de cible, et l'envoi d'une instruction de commande de véhicule traitée au dispositif embarqué, afin que le dispositif embarqué traite l'instruction de commande de véhicule sur la base des informations de vérification de cible et de la chaîne de certificats.

2. Procédé selon la revendication 1, dans lequel, avant la réception (S104) des informations de vérification de cible et de la chaîne de certificats pré-construite envoyées par le premier serveur, le procédé comprend en outre :
la réception d'informations de serveur du premier serveur et d'une première clé publique du premier serveur, dans lequel la première clé publique est une clé correspondant au premier serveur et générée par le premier serveur sur la base d'un algorithme de génération de clés prédéterminé ;
la génération d'une deuxième clé privée et une deuxième clé publique correspondant au dispositif terminal, sur la base de l'algorithme de génération de clés prédéterminé ;
la signature des informations de dispositif du dispositif terminal sur la base de la deuxième clé privée pour obtenir des premières informations de signature ;
la génération d'un certificat racine sur la base de la deuxième clé publique, des informations de dispositif du dispositif terminal et des premières informations de signature ;
la signature des informations de serveur sur la base de la deuxième clé privée pour obtenir des deuxièmes informations de signature ;
la génération d'un deuxième certificat sur la base de la première clé publique, des informations de serveur et des deuxièmes informations de signature ; et
l'envoi d'une première chaîne de certificats comprenant le certificat racine et le deuxième certificat au premier serveur, afin que le premier serveur construise la chaîne de certificats sur la base de la première chaîne de certificats, des informations de dispositif du dispositif embarqué et de la clé prédéterminée du dispositif embarqué.

3. Procédé selon la revendication 2, dans lequel, avant la réception (S104) des informations de vérification de cible et de la chaîne de certificats pré-construite envoyées par le premier serveur, le procédé comprend en outre :
la génération d'une quatrième clé publique correspondant à un utilisateur sur la base de l'algorithme de génération de clés prédéterminé ; et
l'envoi de la quatrième clé publique et des informations de dispositif du dispositif terminal au premier serveur, afin que le premier serveur génère les informations de vérification de cible sur la base des informations de dispositif du dispositif terminal, de la quatrième clé publique, de la clé prédéterminée du dispositif embarqué et des informations de dispositif du dispositif embarqué.

4. Procédé selon la revendication 3, dans lequel la vérification de la chaîne de certificats et des informations de vérification de cible, sur la base d'une clé prédéterminée du dispositif terminal, afin d'obtenir un résultat de vérification, comprend :
la réception de premières informations vérifiables envoyées par le premier serveur, dans lequel les premières informations vérifiables sont des informations correspondant aux informations de vérification de cible et obtenues par le premier serveur par la signature des informations de vérification de cible sur la base d'une première clé privée du premier serveur ;
la vérification du certificat racine et du deuxième certificat de la chaîne de certificats sur la base de la première clé publique du premier serveur et de la deuxième clé publique du dispositif terminal afin d'obtenir un premier résultat de vérification ;
la vérification des premières informations vérifiables sur la base de la première clé publique du premier serveur et des informations de vérification de cible afin d'obtenir un deuxième résultat de vérification ; et
la détermination du résultat de vérification sur la base du premier résultat de vérification et du deuxième résultat de vérification.

5. Procédé selon la revendication 3, dans lequel la génération d'une quatrième clé publique correspondant à un utilisateur sur la base de l'algorithme de génération de clés prédéterminé comprend :
l'envoi d'une demande de vérification d'identité pour l'utilisateur à un second serveur ;
la réception d'un jeton de cible généré par le second serveur sur la base de la demande de vérification d'identité ; et
la réalisation d'une vérification d'identité de l'utilisateur sur la base du jeton de cible et la génération de la quatrième clé publique correspondant à l'utilisateur sur la base de l'algorithme de génération de clés prédéterminé lorsqu'un résultat de vérification d'identité est que la vérification est réussie.

6. Procédé de vérification sur la base de la protection de la vie privée, dans lequel le procédé est appliqué à un dispositif embarqué et comprend :
la réception (S302) d'informations de vérification de cible correspondant à un dispositif terminal et au dispositif embarqué et d'une chaîne de certificats pré-construite qui sont envoyées par un premier serveur, dans lequel la chaîne de certificats est une chaîne de certificats à plusieurs niveaux générée sur la base d'informations du premier serveur, d'une clé prédéterminée du premier serveur, d'informations de dispositif du dispositif terminal, d'une clé prédéterminée du dispositif terminal, d'informations de dispositif du dispositif embarqué et d'une clé prédéterminée du dispositif embarqué ;
la vérification (S304) à la fois de la chaîne de certificats et des informations de vérification de cible sur la base de la clé prédéterminée du dispositif embarqué afin d'obtenir un résultat de vérification ; et
lorsque le résultat de vérification est que la vérification est réussie, le traitement (S306), sur la base des informations de vérification de cible, d'une instruction de commande de véhicule traitée envoyée par le dispositif terminal, pour obtenir une instruction de commande de véhicule, et l'exécution de l'instruction de commande de véhicule, dans lequel l'instruction de commande de véhicule traitée est une instruction obtenue par le dispositif terminal par le traitement de l'instruction de commande de véhicule sur la base des informations de vérification de cible.

7. Procédé selon la revendication 6, dans lequel, avant la vérification (S304) de la chaîne de certificats et des informations de vérification de cible sur la base de la clé prédéterminée du dispositif embarqué, le procédé comprend en outre :
la génération d'une troisième clé publique correspondant au dispositif embarqué, sur la base d'un algorithme de génération de clés prédéterminé ; et
l'envoi de la troisième clé publique et des informations de dispositif du dispositif embarqué au premier serveur, afin que le premier serveur génère la chaîne de certificats sur la base de la troisième clé publique, des informations de dispositif du dispositif embarqué, des informations du premier serveur, de la clé prédéterminée du premier serveur, des informations de dispositif du dispositif terminal et de la clé prédéterminée du dispositif terminal.

8. Procédé selon la revendication 7, dans lequel la vérification (S304) à la fois de la chaîne de certificats et des informations de vérification de cible, sur la base de la clé prédéterminée du dispositif embarqué pour obtenir un résultat de vérification comprend :
la vérification de la chaîne de certificats sur la base de la troisième clé publique du dispositif embarqué afin d'obtenir un troisième résultat de vérification ;
la réception d'une première clé publique et de premières informations vérifiables envoyées par le premier serveur, dans lequel les premières informations vérifiables sont des informations correspondant aux informations de vérification de cible et obtenues par le premier serveur par la signature des informations de vérification de cible sur la base d'une première clé privée du premier serveur, et la première clé publique et la première clé privée sont des clés correspondant au premier serveur et générées par le premier serveur sur la base de l'algorithme de génération de clés prédéterminé ;
la vérification des premières informations vérifiables sur la base de la première clé publique du premier serveur et des informations de vérification de cible afin d'obtenir un quatrième résultat de vérification ; et
la détermination du résultat de vérification sur la base du troisième résultat de vérification et du quatrième résultat de vérification.

9. Procédé selon la revendication 7, dans lequel le traitement (S306), sur la base des informations de vérification de cible, d'une instruction de commande de véhicule traitée envoyée par le dispositif terminal, pour obtenir une instruction de commande de véhicule, et l'exécution de l'instruction de commande de véhicule comprennent :
la réception d'une quatrième clé publique envoyée par le dispositif terminal, dans lequel la quatrième clé publique est une clé correspondant à un utilisateur du dispositif terminal et générée par le dispositif terminal sur la base de l'algorithme de génération de clés prédéterminé ;
le traitement, sur la base d'une troisième clé privée du dispositif embarqué, de l'instruction de commande de véhicule traitée envoyée par le dispositif terminal, pour obtenir l'instruction de commande de véhicule et des deuxièmes informations vérifiables, dans lequel l'instruction de commande de véhicule traitée est obtenue par le dispositif terminal par le chiffrement de l'instruction de commande de véhicule sur la base de la troisième clé publique du dispositif embarqué, la troisième clé privée est une clé privée correspondant à la troisième clé publique et générée par le dispositif embarqué sur la base de l'algorithme de génération de clés prédéterminé, les deuxièmes informations vérifiables sont des informations obtenues par le dispositif terminal par le chiffrement de l'instruction de commande de véhicule sur la base d'une quatrième clé privée de l'utilisateur, et la quatrième clé privée est une clé privée correspondant à la quatrième clé publique et générée par le dispositif terminal sur la base de l'algorithme de génération de clés prédéterminé ; et
la vérification des deuxièmes informations vérifiables sur la base de l'instruction de commande de véhicule et de la quatrième clé publique de l'utilisateur, et l'exécution de l'instruction de commande de véhicule lorsque la vérification est réussie.

10. Procédé de vérification sur la base de la protection de la vie privée, dans lequel le procédé est appliqué à un premier serveur et comprend :
la génération (S502) d'informations de vérification de cible correspondant à un dispositif terminal et à un dispositif embarqué lors de la réception d'une demande de vérification d'identité locale envoyée par le dispositif terminal pour commander le dispositif embarqué ;
et
l'envoi (S504) des informations de vérification de cible et d'une chaîne de certificats pré-construite au dispositif terminal et au dispositif embarqué afin que le dispositif terminal traite une instruction de commande de véhicule sur la base des informations de vérification de cible après la réussite de la vérification à la fois de la chaîne de certificats et des informations de vérification de cible sur la base d'une clé prédéterminée du dispositif terminal, afin que le dispositif embarqué traite, sur la base des informations de vérification de cible, une instruction de commande de véhicule traitée envoyée par le dispositif terminal après la réussite de la vérification à la fois de la chaîne de certificats et des informations de vérification de cible sur la base d'une clé prédéterminée du dispositif embarqué, dans lequel la chaîne de certificats est une chaîne de certificats à plusieurs niveaux générée sur la base d'informations du premier serveur, d'une clé prédéterminée du premier serveur, d'informations de dispositif du dispositif terminal, de la clé prédéterminée du dispositif terminal, d'informations de dispositif du dispositif embarqué et de la clé prédéterminée du dispositif embarqué.

11. Procédé selon la revendication 10, dans lequel, avant l'envoi (S504) des informations de vérification de cible et d'une chaîne de certificats pré-construite au dispositif terminal et au dispositif embarqué, le procédé comprend en outre :
la génération d'une première clé privée et d'une première clé publique correspondant au premier serveur sur la base d'un algorithme de génération de clés prédéterminé ;
l'envoi de la première clé publique et des informations de serveur au dispositif terminal ;
la réception d'une première chaîne de certificats comprenant un certificat racine et un deuxième certificat, envoyée par le dispositif terminal, dans lequel le certificat racine est déterminé par le dispositif terminal sur la base d'une deuxième clé publique, des informations de dispositif du dispositif terminal et des premières informations de signature, les premières informations de signature sont obtenues par le dispositif terminal par la signature des informations de dispositif du dispositif terminal sur la base d'une deuxième clé privée, la deuxième clé publique et la deuxième clé privée sont des clés correspondant au dispositif terminal et générées par le dispositif terminal sur la base d'un algorithme de génération de clés prédéterminé, le deuxième certificat est déterminé par le dispositif terminal sur la base de la première clé publique, des informations de serveur et des deuxièmes informations de signature, et les deuxièmes informations de signature sont obtenues par le dispositif terminal par la signature des informations de serveur sur la base de la deuxième clé privée ;
la réception d'une troisième clé publique et des informations de dispositif du dispositif embarqué qui sont envoyées par le dispositif embarqué, dans lequel la troisième clé publique est une clé correspondant au dispositif embarqué et générée par le dispositif embarqué sur la base de l'algorithme de génération de clés prédéterminé ;
la signature des informations de dispositif du dispositif embarqué sur la base de la première clé privée pour obtenir des troisièmes informations de signature ;
la détermination de la troisième clé publique, des informations de dispositif du dispositif embarqué et des troisièmes informations de signature en tant que troisième certificat ; et
le stockage de la chaîne de certificats comprenant le troisième certificat et la première chaîne de certificats.

12. Système de vérification sur la base de la protection de la vie privée, comprenant un dispositif terminal, un dispositif embarqué et un premier serveur, dans lequel
le dispositif terminal est configuré pour envoyer une demande de vérification d'identité locale au premier serveur afin de commander le dispositif embarqué ;
le premier serveur est configuré pour générer des informations de vérification de cible correspondant au dispositif terminal et au dispositif embarqué, et pour envoyer les informations de vérification de cible et une chaîne de certificats pré-construite au dispositif terminal et au dispositif embarqué, dans lequel la chaîne de certificats est une chaîne de certificats à plusieurs niveaux générée sur la base d'informations du premier serveur, d'une clé prédéterminée du premier serveur, d'informations de dispositif du dispositif terminal, d'une clé prédéterminée du dispositif terminal, d'informations de dispositif du dispositif embarqué et d'une clé prédéterminée du dispositif embarqué ;
le dispositif terminal est configuré pour vérifier à la fois la chaîne de certificats et les informations de vérification de cible sur la base de la clé prédéterminée du dispositif terminal pour obtenir un premier résultat de vérification ; et lorsque le premier résultat de vérification est que la vérification est réussie, traiter une instruction de commande de véhicule sur la base des informations de vérification de cible et envoyer une instruction de commande de véhicule traitée au dispositif embarqué ; et
le dispositif embarqué est configuré pour vérifier à la fois la chaîne de certificats et les informations de vérification de cible sur la base de la clé prédéterminée du dispositif embarqué pour obtenir un deuxième résultat de vérification ; et lorsque le deuxième résultat de vérification indique que la vérification est réussie, traiter l'instruction de commande de véhicule traitée reçue sur la base des informations de vérification de cible pour obtenir l'instruction de commande de véhicule, et exécuter l'instruction de commande de véhicule.

13. Dispositif de vérification sur la base de la protection de la vie privée, dans lequel le dispositif de vérification sur la base de la protection de la vie privée comprend un processeur et une mémoire agencée pour stocker des instructions exécutables par ordinateur et, lorsque les instructions exécutables sont exécutées, le processeur est amené à :
envoyer une demande de vérification d'identité locale pour commander un dispositif embarqué à un premier serveur, dans lequel le premier serveur est configuré pour générer des informations de vérification de cible correspondant au dispositif de vérification sur la base de la protection de la vie privée et au dispositif embarqué pour la demande de vérification d'identité ;
recevoir les informations de vérification de cible et une chaîne de certificats pré-construite envoyées par le premier serveur, et vérifier à la fois la chaîne de certificats et les informations de vérification de cible sur la base d'une clé prédéterminée du dispositif de vérification sur la base de la protection de la vie privée pour obtenir un résultat de vérification, dans lequel la chaîne de certificats est une chaîne de certificats à plusieurs niveaux générée sur la base d'informations du premier serveur, d'une clé prédéterminée du premier serveur, d'informations du dispositif de vérification sur la base de la protection de la vie privée, de la clé prédéterminée du dispositif de vérification sur la base de la protection de la vie privée, d'informations de dispositif du dispositif embarqué et d'une clé prédéterminée du dispositif embarqué ; et
lorsque le résultat de vérification est que la vérification est réussie, traiter (S106) une instruction de commande de véhicule sur la base des informations de vérification de cible et envoyer une instruction de commande de véhicule traitée au dispositif embarqué, afin que le dispositif embarqué traite l'instruction de commande de véhicule sur la base des informations de vérification de cible et de la chaîne de certificats.

14. Dispositif de vérification sur la base de la protection de la vie privée, dans lequel le dispositif de vérification sur la base de la protection de la vie privée comprend un processeur et une mémoire agencée pour stocker des instructions exécutables par ordinateur et, lorsque les instructions exécutables sont exécutées, le processeur est amené à :
recevoir des informations de vérification de cible correspondant à un dispositif terminal et au dispositif de vérification sur la base de la protection de la vie privée et une chaîne de certificats pré-construite envoyées par un premier serveur, dans lequel la chaîne de certificats est une chaîne de certificats à plusieurs niveaux générée sur la base d'informations du premier serveur, d'une clé prédéterminée du premier serveur, d'informations de dispositif du dispositif terminal, d'une clé prédéterminée du dispositif terminal, d'informations de dispositif du dispositif de vérification sur la base de la protection de la vie privée et d'une clé prédéterminée du dispositif de vérification sur la base de la protection de la vie privée ;
vérifier à la fois la chaîne de certificats et les informations de vérification de cible sur la base de la clé prédéterminée du dispositif de vérification sur la base de la protection de la vie privée ; et
une fois la vérification réussie, traiter, sur la base des informations de vérification de cible, une instruction de commande de véhicule traitée envoyée par le dispositif terminal, pour obtenir une instruction de commande de véhicule, et exécuter l'instruction de commande de véhicule, dans lequel l'instruction de commande de véhicule traitée est une instruction obtenue par le dispositif terminal par le traitement de l'instruction de commande de véhicule sur la base des informations de vérification de cible.

15. Dispositif de vérification sur la base de la protection de la vie privée, dans lequel le dispositif de vérification sur la base de la protection de la vie privée comprend un processeur et une mémoire agencée pour stocker des instructions exécutables par ordinateur et, lorsque les instructions exécutables sont exécutées, le processeur est amené à :
générer des informations de vérification de cible correspondant à un dispositif terminal et à un dispositif embarqué lors de la réception d'une demande de vérification d'identité locale envoyée par le dispositif terminal pour commander le dispositif embarqué;
et
envoyer les informations de vérification de cible et une chaîne de certificats pré-construite au dispositif terminal et au dispositif embarqué, de sorte que le dispositif terminal traite une instruction de commande de véhicule sur la base des informations de vérification de cible après la réussite de la vérification à la fois de la chaîne de certificats et des informations de vérification de cible sur la base d'une clé prédéterminée du dispositif terminal, de sorte que le dispositif embarqué traite, sur la base des informations de vérification de cible, une instruction de commande de véhicule traitée envoyée par le dispositif terminal après la réussite de la vérification à la fois de la chaîne de certificats et des informations de vérification de cible sur la base d'une clé prédéterminée, dans lequel la chaîne de certificats est une chaîne de certificats à plusieurs niveaux générée sur la base d'informations du dispositif de vérification sur la base de la protection de la vie privée, d'une clé prédéterminée du dispositif de vérification sur la base de la protection de la vie privée, d'informations de dispositif du dispositif terminal, de la clé prédéterminée du dispositif terminal, d'informations de dispositif du dispositif embarqué et de la clé prédéterminée du dispositif embarqué.
